(19) Europäisches Patentamt
European Patent Office
Office européen des brevets

(11) **EP 3 439 414 A1**

(12) **EUROPEAN PATENT APPLICATION**
published in accordance with Art. 153(4) EPC

(43) Date of publication:
06.02.2019 Bulletin 2019/06

(51) Int Cl.:
*H04W 74/08* (2009.01)

(21) Application number: 17773332.6

(86) International application number:
PCT/CN2017/079149

(22) Date of filing: 31.03.2017

(87) International publication number:
WO 2017/167303 (05.10.2017 Gazette 2017/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 01.04.2016 CN 201610203748

(71) Applicant: ZTE Corporation
Shenzhen, Guangdong 518057 (CN)

(72) Inventors:
• YANG, Ling
  Shenzhen
  Guangdong 518057 (CN)
• GOU, Wei
  Shenzhen
  Guangdong 518057 (CN)
• ZHAO, YA Jun
  Shenzhen
  Guangdong 518057 (CN)
• PENG, Focai
  Shenzhen
  Guangdong 518057 (CN)

(74) Representative: Aipex B.V.
P.O. Box 30223
3001 DE Rotterdam (NL)

(54) **CHANNEL ACCESS METHOD AND DEVICE, USER EQUIPMENT, BASE STATION, AND COMPUTER STORAGE MEDIUM**

(57) Provided in the embodiments is a channel access method and apparatus, a user equipment (UE), a base station and a computer storage medium. A priority class in use of an unlicensed carrier is determined, and channel access of the unlicensed carrier is performed according to a clear channel assessment (CCA) parameter matching the determined priority class and used for performing a CCA detection before access to the unlicensed carrier. Thus, a problem of low channel access probability on the unlicensed carrier during channel access with an unlicensed carrier may be solved.

Determine a priority class in use of an unlicensed carrier — S201

Perform channel access of the unlicensed carrier according to a CCA parameter, where the CCA parameter matches the determined priority class and is used for performing a CCA detection before access to the unlicensed carrier — S202

**FIG. 2**

**Description**

**CROSS-REFERENCE TO RELATED APPLICATIONS**

This application claims priority to a Chinese patent application No. 201610203748.0 filed on April 1, 2016, disclosure of which is incorporated herein by reference in its entirety.

**TECHNICAL FIELD**

The present invention relates to the field of communications, and specifically, to a channel access method and apparatus, a user equipment (UE), a base station and a computer storage medium.

**BACKGROUND**

With a rapid growth of data services, the pressure on data transmission on carriers of a licensed spectrum is also increasing. Therefore, the use of carriers in an unlicensed spectrum to share the data traffic in the licensed carrier becomes an important evolution direction of the subsequent development of Long Term Evolution (LTE). The unlicensed spectrum has the following characteristics: free/low fees; low entry requirements and low costs; large available bandwidth; resource sharing and so on.

A research on Release 13 (Rel-13) of the LTE system began in September 2014. An important research topic for the LTE system is to work with the unlicensed spectrum or carrier. The use of existing technologies related to the unlicensed spectrum or carrier enables the LTE system to use the carriers of the currently existing unlicensed spectrum, which greatly expands potential spectrum resources of the LTE system and enables the LTE system to have lower spectrum costs. After the study item (SI) and work item (WI) phases of the licensed assisted access (LAA), standardization work for a Rel-13 LAA downlink was completed in November 2015, and a consensus was reached on a LAA enhancement issue at the 70th (RAN#70) plenary session of the subsequent radio access network, with the aim of studying and supporting the LAA uplink behavior under frame structure type 3. In Release 14 (Rel-14), the standardization research work for the LAA uplink was initiated in February 2016. In the work, an important issue is an uplink channel access technology. For the uplink channel access technology, only an uplink available listen-before-talk (LBT) mechanism is established in this conference. However, a problem of low channel access probability exists based merely on the established LBT mechanism.

Therefore, the problem of low channel access probability on an unlicensed carrier needs to be solved in the existing art.

**SUMMARY**

Embodiments of the present invention provide a channel access method and apparatus, a UE, a base station and a computer storage medium, which can effectively solve the problem of low channel access probability on an unlicensed carrier.

An aspect of the embodiments of the present invention provides a channel access method, including: determining a priority class in use of an unlicensed carrier; and performing channel access of the unlicensed carrier according to a clear channel assessment (CCA) parameter. The CCA parameter matches the determined priority class and is used for performing a CCA detection before access to the unlicensed carrier.

Another aspect of the embodiments of the present invention further provides a computer storage medium, which is configured to store computer executable instructions for executing the channel access method described in the embodiments of the present invention.

Another aspect of the embodiments of the present invention provides a channel access apparatus, including: a determination module configured to determine a priority class in use of an unlicensed carrier; and a processing module configured to perform channel access of the unlicensed carrier according to a CCA parameter. The CCA parameter matches the determined priority class and is used for performing a CCA detection before access to the unlicensed carrier.

Another aspect of the embodiments of the present invention provides a UE, including: a memory configured to store executable instructions for channel access; and a processor configured to execute the executable instructions for channel access to determine a priority class in use of an unlicensed carrier, and perform channel access of the unlicensed carrier according to a CCA parameter. The CCA parameter matches the determined priority class and is used for performing a CCA detection before access to the unlicensed carrier.

Another aspect of the embodiments of the present invention provides a base station, including: a memory configured to store executable instructions for channel access; and a processor configured to execute the executable instructions for channel access to determine a priority class of an unlicensed carrier, and perform channel access of the unlicensed carrier according to a CCA parameter. The CCA parameter matches the determined priority class and is used for performing a CCA detection before access to the unlicensed carrier.

In the channel access method and apparatus, the UE, the base station and the computer storage medium provided by the embodiments of the present invention, the priority class in use of the unlicensed carrier is determined; and the channel access of the unlicensed carrier is performed according to the CCA parameter. The CCA parameter matches the determined priority class and is used for performing the CCA detection before access to the unlicensed carrier. Thus, the problem of low channel access probability on an unlicensed carrier can be effectively solved and then the success rate of channel access is improved.

## BRIEF DESCRIPTION OF DRAWINGS

The drawings described herein are used to provide a further understanding of the present invention, and form a part of the present application. The exemplary embodiments and descriptions thereof in the present invention are used to explain the present invention and do not limit the present invention in any improper way. In the drawings:

FIG. 1 is a schematic diagram illustrating network architecture in an application scenario of a channel access method according to an embodiment of the present invention;

FIG. 2 is a flowchart of a channel access method according to an embodiment of the present invention;

FIG. 3 is a schematic diagram illustrating CCA starting points corresponding to different priority classes according to an embodiment of the present invention;

FIG. 4 is a schematic diagram illustrating arbitrary selection of CCA starting points in intervals corresponding to different priority classes according to an embodiment of the present invention;

FIG. 5 is a schematic diagram of a combination of multi-subframe scheduling and single-subframe scheduling according to an embodiment of the present invention;

FIG. 6 is a structural block diagram of a channel access apparatus according to an embodiment of the present invention;

FIG. 7 is a structural block diagram of a determination module in the channel access apparatus according to an embodiment of the present invention;

FIG. 8 is a structural block diagram of a channel access apparatus according to an embodiment of the present invention;

FIG. 9 is a structural block diagram 1 of a processing module in the channel access apparatus according to an embodiment of the present invention;

FIG. 10 is a structural block diagram 2 of a processing module in the channel access apparatus according to an embodiment of the present invention;

FIG. 11 is a structural block diagram 3 of a processing module in the channel access apparatus according to an embodiment of the present invention;

FIG. 12 is a structural block diagram of a UE according to an embodiment of the present invention; and

FIG. 13 is a structural block diagram of a base station according to an embodiment of the present invention.

## DETAILED DESCRIPTION

The present invention will be described in detail with reference to the drawings in conjunction with the embodiments. It is to be noted that if not in collision, the embodiments and features therein in the present application may be combined with each other.

It is to be noted that the terms "first", "second" and the like in the description, claims and drawings of the present invention are used to distinguish between similar objects and are not necessarily used to describe a particular order or sequence.

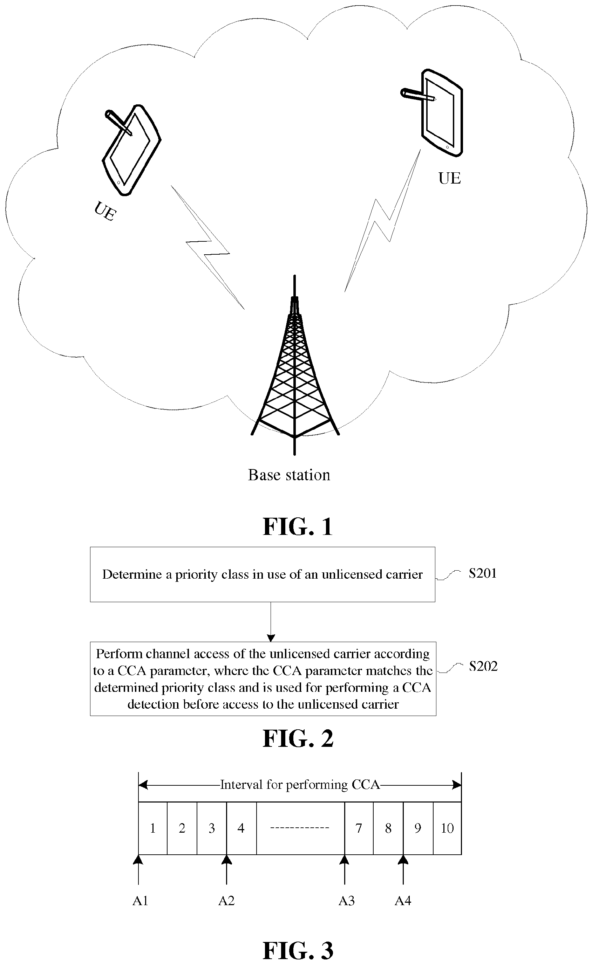

In the embodiment of the present invention, as shown in FIG. 1, in the LTE network environment and during a data interaction between a base station and a UE, in order to ensure the quality of data services, a priority class in use of an unlicensed carrier is determined, and channel access of the unlicensed carrier is performed according to a CCA parameter. The CCA parameter matches the determined priority class and is used for performing a CCA detection before access to the unlicensed carrier. Thus, the problem of low channel access probability on the unlicensed carrier can be effectively solved and then the success rate of channel access is improved.

An embodiment of the present invention provides a channel access method. FIG. 2 is a flowchart of the channel access method according to the embodiment of the present invention. As shown in FIG. 2, the method includes the steps described below.

In S201, a priority class in use of an unlicensed carrier is determined.

In S202, channel access of the unlicensed carrier is performed according to a CCA parameter, where the CCA parameter matches the determined priority class and is used for performing a CCA detection before access to the unlicensed carrier.

Through the above steps, the channel access is performed in a manner of matching the CCA parameter for performing the CCA detection with the priority class, and thus the problem of low channel access probability on the unlicensed carrier is effectively solved, and the success rate of the channel access is improved to some extent.

Since multiple priority classes in use of the unlicensed carrier may be provided, multiple manners of determining the priority class in use of the unlicensed carrier may also be provided. For example, if one priority class in use in use of the unlicensed carrier, this priority class is determined to be the priority class; otherwise, if at least two priority classes in use of the unlicensed carrier are provided, one priority class is selected according to a predetermined principle from the at least two priority classes as the priority class. For example, for a UE uplink channel access, when multiple different priority classes are included in the UE in a physical uplink shared channel (PUSCH) transmission, the channel access may be performed according to the LBT mechanism or CCA parameter corresponding to a predetermined priority level.

The predetermined principle may also include multiple types, for example, at least one type described below may be included.

A lower priority class is selected from the at least two priority classes as the priority class, for example, when multiple different priority classes are included in an uplink PUSCH transmission, a LBT parameter corresponding to the lowest priority class is used to perform channel access and transmission occupation.

A higher priority class is selected from the at least two priority classes as the priority class, for example, when multiple different priority classes are included in the uplink PUSCH transmission, a LBT parameter corresponding to the highest priority class is used to perform the channel access and transmission occupation.

A priority class determined by the UE is selected from the at least two priority classes as the priority class, for example, the UE selects one LBT priority class or LBT mechanism, and determines the minimum uplink transmission duration, the maximum transmission duration, preset transmission duration, or the number of symbols using LBT.

A priority class determined by the base station is selected from the at least two priority classes as the priority class, for example, the base station determines the minimum transmission duration, the maximum transmission duration, the preset transmission duration, or the number of symbols using LBT according to the priority of the uplink transmission service or transmission signal/channel.

A priority class is selected according to a predetermined adaptive selection rule from the at least two priority classes as the priority class.

A preset priority class is selected from the at least two priority classes, for example, when multiple different priority classes are included in the uplink PUSCH transmission, a LBT parameter corresponding to the preset priority class is used to perform the channel access and transmission occupation. The preset priority may at least be determined by one of: agreement in advance between the base station and the UE; configuration through high-layer radio resource control (RRC) signaling; notification to the UE through the physical layer specific downlink control information (DCI); and notification to the UE through the physical layer common DCI. The above-mentioned priority class may include multiple types, for example, at least one of: a priority class of a service type, a priority class of a signal type, and a priority class of a channel type. The service type may include at least one of: voice, video, best effort and background. The signal type may include at least one of: a sounding reference signal (SRS), and a distributed resource signal (DRS). The channel type may include at least one of: an uplink grant channel, a downlink grant channel, a physical random access channel (PRACH), a physical uplink control channel (PUCCH), a physical uplink shared channel (PUSCH), a physical downlink shared channel (PDSCH), and a physical downlink control channel (PDCCH).

In an embodiment, the priority class in use of the unlicensed carrier may be determined in multiple manners. For example, a priority class may be judged out correspondingly when the base station itself and the UE itself detects the service, channel or signal, and of course may be reported by other network elements; for example, the UE may determine the priority class in use of the unlicensed carrier in at least one of the following manners: in a predefined manner; through a negotiation between the base station and the UE; through reception of radio resource control (RRC) signaling; through physical layer specific DCI signaling; and through physical layer common DCI signaling. Correspondingly, the base station may also determine the priority class in use of the unlicensed carrier in a similar manner as described above.

It is to be noted that the above-mentioned CCA parameter is used to perform the CCA detection before the unlicensed carrier is accessed, and any parameter related to the CCA detection may be considered to belong to the range. For example, the CCA parameter may include at least one of: a LBT mechanism, a CCA starting point, CCA duration, transmission duration, the number of LBT symbols, a transport block (TB) size, the number of times of retransmission of a hybrid automatic repeat request (HARQ), the maximum contention window (CW), the minimum contention window, and an coefficient n, where defer duration = predetermined fixed duration + n * slot, and the slot refers to time slot length.

The LBT mechanism may include: an LBT Cat2 and an LBT Cat4. The transmission duration may include multiple types, for example, separate uplink transmission duration, or remaining duration after downlink data is transmitted during an occupation period, where the duration may be at a subframe level, or at a symbol level. A position of the CCA starting point may include multiple types, for example, at least one of: a starting point position in each of N equal-length sub-intervals of an interval in which the CCA is performed, and a starting point position randomly selected from a predetermined interval of the interval in which the CCA is performed, where N is a positive integer. Different priority classes are related to the CCA starting point in LBT. For example, different priority classes are related to the CCA starting point at the LBT Cat2, and the CCA duration length is unchanged. As the priority class decreases, the CCA starting point at the LBT Cat2 is sequentially later than the CCA starting point at the previous priority class. Different priority classes are also related to the LBT Cat4 mechanism. As the priority class decreases, the CCA starting point at the LBT Cat4 is sequentially later than the CCA starting point at the previous priority class. Or, as the priority class decreases, the CCA starting point at the LBT Cat4 is not fixed, and the contention window size, the number of LBT symbols, MCOT_U and the TB size are sequentially increased. Different priority classes are also related to a hybrid mechanism of the LBT Cat2 and the LBT Cat4. As the priority class decreases, the LBT Cat2 and the LBT Cat4 mechanism are sequentially used, and a combination of the LBT parameter, the number of LBT symbols, the MCOT_U, the TB size and a fixed parameter which are corresponding to each LBT mechanism and among which at least one is unchanged and other parameters are increased or decreased is used.

For a specific LBT mechanism, for example, the LBT Cat2, the CCA duration is included. The CCA duration may include: idle CCA duration and sense CCA duration, where a time domain structure of the CCA duration may include multiple types, for example, at least one of: CCA duration = idle CCA duration + m * sense CCA duration; CCA duration = m * sense CCA duration + idle CCA duration; and CCA duration = m1 * sense CCA duration + idle CCA duration + m2 * sense CCA duration; where m, m1, and m2 are preset parameters. It should be noted that the above-mentioned idle CCA duration may be fixed or variable. Optionally, values of the above-mentioned CCA parameters may be determined according to the specific situation. For example, the CCA duration includes at least one of: 16 $\mu$s, 25 $\mu$s, 34 $\mu$s and 43 $\mu$s. The transmission duration includes at least one of: 0.5 ms, 1 ms, 1.5 ms, 2 ms, 3 ms, 4 ms, 5 ms, 8 ms and 10ms. The number of LBT symbols includes: at least one of one symbol, two symbols or remaining symbols in a subframe at an end after a downlink transmission. The TB size includes one of: a first resource block, a second resource block, a third resource block and a fourth resource block. A range of the contention window includes one of: {0, 1}, {1, 2} , {2, 3}, {3, 4, 5, 6, 7}, {7, 15}, {15, 31, 63}, {15, 31, 63, 127, 255, 511, 1023}. The n includes one of: 0, 1, 2, 3, 4, 5, 6 and 7.

It is to be noted that a matching relationship between the priority class and the CCA parameter may include multiple types and the number of the types is related to the number of combination types between the CCA parameters, that is, the matching relationship between the priority class and the CCA parameter is as much as the number of combinations between the CCA parameters. Various matching relationships given below are just some examples of combinations and are not considered to be all combinations.

The matching relationships described below between the priority class and the CCA parameter may be included. The lower the priority class, the later a CCA starting point. The lower the priority class, the later the CCA starting point, and CCA duration is unchanged. The lower the priority class, the later the CCA starting point, and the longer the CCA duration. The lower the priority class, the CCA starting point is unchanged, and the longer the CCA duration. The lower the priority class, the later the CCA starting point, the CCA duration is unchanged, and a value of transmission duration is unchanged. The lower the priority class, the later the CCA starting point, the CCA duration is unchanged, and the larger the value of the transmission duration. The lower the priority class, the later the CCA starting point, the longer the CCA duration, and the larger the value of the transmission duration. The lower the priority class, the CCA starting point is unchanged, the CCA duration is unchanged, and the larger the value of the transmission duration. The lower the priority class, the CCA starting point is unchanged, the longer the CCA duration, and the value of the transmission duration is unchanged. The lower the priority class, the CCA starting point is unchanged, the longer the CCA duration, and the larger the value of the transmission duration. The lower the priority class, the later the CCA starting point, the CCA duration is unchanged, the value of the transmission duration is unchanged, and the number of LBT symbols is unchanged. The lower the priority class, the later the CCA starting point, the CCA duration is unchanged, the value of the transmission duration is unchanged, and the larger the number of the LBT symbols. The lower the priority class, the later the CCA starting point, the CCA duration is unchanged, the value of the transmission duration is unchanged, and the smaller the number of the LBT symbols. The lower the priority class, the later the CCA starting point, the CCA duration is unchanged, the larger the value of the transmission duration, and the number of the LBT symbols is unchanged. The lower the priority class, the later the CCA starting point, the CCA duration is unchanged, the larger the value of the transmission duration, and the larger the number of the LBT symbols. The lower the priority class, the later the CCA starting point, the CCA duration is unchanged, the larger the value of the transmission duration, and the smaller the number of the LBT symbols. The lower the priority class, the later the CCA starting point, the longer the CCA duration, the larger the value of the transmission duration, and the number of the LBT symbols is unchanged. The lower the priority class, the later the CCA starting point, the longer the CCA duration, the larger the value of the transmission duration, and the larger the number of the LBT symbols. The lower the priority class, the later the CCA starting point, the longer the CCA duration, the larger the value of the transmission duration, and the smaller the number of the LBT symbols. The lower the priority class, the CCA starting point is unchanged, the longer the CCA duration, the value of the transmission duration is unchanged, and the number of the LBT symbols is unchanged. The lower the priority class, the CCA starting point is unchanged, the longer the CCA duration, the value of the transmission duration is unchanged, and the larger the number of the LBT symbols. The lower the priority class, the CCA starting point is unchanged, the longer the CCA duration, the value of the transmission duration is unchanged, and the smaller the number of the LBT symbols. The lower the priority class, the CCA starting point is unchanged, the longer the CCA duration, the larger the value of the transmission duration, and the number of the LBT symbols is unchanged. The lower the priority class, the CCA starting point is unchanged, the longer the CCA duration, the larger the value of the transmission duration, and the larger the number of the LBT symbols. The lower the priority class, the CCA starting point is unchanged, the longer the CCA duration, the larger the value of the transmission duration, and the smaller the number of the LBT symbols. The lower the priority class, the CCA starting point is unchanged, the CCA duration is unchanged, the larger the value of the transmission duration, and the number of the LBT symbols is unchanged. The lower the priority class, the CCA starting point is unchanged, the CCA duration is unchanged, the larger the value of the transmission duration, and the larger the number of the LBT symbols. The lower the priority class, the CCA starting point is unchanged, the CCA duration is unchanged, the larger the value of the transmission duration, and the smaller the number of the LBT symbols. The lower the priority class, the later the CCA starting point, the CCA duration is unchanged, the value of the transmission duration is unchanged, the number of the LBT symbols is unchanged, and a TB size is unchanged. The lower the priority class, the later the CCA starting point, the CCA duration is unchanged, the value of the transmission duration is unchanged, the number of the LBT symbols is unchanged, and the larger the TB size. The lower the priority class, the later the CCA starting point, the CCA duration is unchanged, the value of the transmission duration is unchanged, the number of the LBT symbols is unchanged, and the smaller the TB size. The lower the priority class, the later the CCA starting point, the CCA duration is unchanged, the value of the transmission duration is unchanged, the larger the number of the LBT symbols, and the TB size is unchanged. The lower the priority class, the later the CCA starting point, the CCA duration is unchanged, the value of the transmission duration is unchanged, the larger the number of the LBT symbols, and the larger the TB size. The lower the priority class, the later the CCA starting point, the CCA duration is unchanged, the value of the transmission duration is unchanged, the larger the number of the LBT symbols, and the smaller the TB size. The lower the priority class, the later the CCA starting point, the CCA duration is unchanged, the value of the transmission duration is unchanged, the smaller the number of the LBT symbols, and the TB size is unchanged. The lower the priority class, the later the CCA starting point, the CCA duration is unchanged, the value of the transmission duration is unchanged, the smaller the number of the LBT symbols, and the larger the TB size. The lower the priority class, the later the CCA starting point, the CCA duration is unchanged, the value of the transmission duration is unchanged, the smaller the number of the LBT symbols, and the smaller the TB size. The lower the priority class, the later the CCA starting point, the CCA duration is unchanged, the larger the value of the transmission duration, the number of the LBT symbols is unchanged, and the TB size is unchanged. The lower the priority class, the later the CCA starting point, the CCA duration is unchanged, the larger the value of the transmission duration, the number of the LBT symbols is unchanged, and the larger the TB size. The lower the priority class, the later the CCA starting point, the CCA duration is unchanged, the larger the value of the transmission duration, the number of the LBT symbols is unchanged, and the smaller the TB size. The lower the priority class, the later the CCA starting point, the CCA duration is unchanged, the larger the value of the transmission duration, the larger the number of the LBT symbols, and the TB size is unchanged. The lower the priority class, the later the CCA starting point, the CCA duration is unchanged, the larger the value of the transmission duration, the larger the number of the LBT symbols, and the larger the TB size. The lower the priority class, the later the CCA starting point, the CCA duration is unchanged, the larger the value of the transmission duration, the larger the number of the LBT symbols, and the smaller the TB size. The lower the priority class, the later the CCA starting point, the CCA duration is unchanged, the larger the value of the transmission duration, the smaller the number of the LBT symbols, and the TB size is unchanged. The lower the priority class, the later the CCA starting point, the CCA duration is unchanged, the larger the value of the transmission duration, the smaller the number of the LBT symbols, and the larger the TB size.

The lower the priority class, the later the CCA starting point, the CCA duration is unchanged, the larger the value of the transmission duration, the smaller the number of the LBT symbols, and the smaller the TB size. The lower the priority class, the later the CCA starting point, the longer the CCA duration, the larger the value of the transmission duration, the number of the LBT symbols is unchanged, and the TB size is unchanged. The lower the priority class, the later the CCA starting point, the longer the CCA duration, the larger the value of the transmission duration, the number of the LBT symbols is unchanged, and the larger the TB size. The lower the priority class, the later the CCA starting point, the longer the CCA duration, the larger the value of the transmission duration, the number of the LBT symbols is unchanged, and the smaller the TB size. The lower the priority class, the later the CCA starting point, the longer the CCA duration, the larger the value of the transmission duration, the larger the number of the LBT symbols, and the TB size is unchanged. The lower the priority class, the later the CCA starting point, the longer the CCA duration, the larger the value of the transmission duration, the larger the number of the LBT symbols, and the larger the TB size. The lower the priority class, the later the CCA starting point, the longer the CCA duration, the larger the value of the transmission duration, the larger the number of the LBT symbols, and the smaller the TB size. The lower the priority class, the later the CCA starting point, the longer the CCA duration, the larger the value of the transmission duration, the smaller the number of the LBT symbols, and the TB size is unchanged. The lower the priority class, the later the CCA starting point, the longer the CCA duration, the larger the value of the transmission duration, the smaller the number of the LBT symbols, and the larger the TB size. The lower the priority class, the later the CCA starting point, the longer the CCA duration, the larger the value of the transmission duration, the smaller the number of the LBT symbols, and the smaller the TB size. The lower the priority class, the CCA starting point is unchanged, the longer the CCA duration, the value of the transmission duration is unchanged, the number of the LBT symbols is unchanged, and the TB size is unchanged. The lower the priority class, the CCA starting point is unchanged, the longer the CCA duration, the value of the transmission duration is unchanged, the number of the LBT symbols is unchanged, and the larger the TB size. The lower the priority class, the CCA starting point is unchanged, the longer the CCA duration, the value of the transmission duration is unchanged, the number of the LBT symbols is unchanged, and the smaller the TB size. The lower the priority class, the CCA starting point is unchanged, the longer the CCA duration, the value of the transmission duration is unchanged, the larger the number of the LBT symbols, and the TB size is unchanged. The lower the priority class, the CCA starting point is unchanged, the longer the CCA duration, the value of the transmission duration is unchanged, the larger the number of the LBT symbols, and the larger the TB size. The lower the priority class, the CCA starting point is unchanged, the longer the CCA duration, the value of the transmission duration is unchanged, the larger the number of the LBT symbols, and the smaller the TB size. The lower the priority class, the CCA starting point is unchanged, the longer the CCA duration, the value of the transmission duration is unchanged, the smaller the number of the LBT symbols, and the TB size is unchanged. The lower the priority class, the CCA starting point is unchanged, the longer the CCA duration, the value of the transmission duration is unchanged, the smaller the number of the LBT symbols, and the larger the TB size. The lower the priority class, the CCA starting point is unchanged, the longer the CCA duration, the value of the transmission duration is unchanged, the smaller the number of the LBT symbols, and the smaller the TB size. The lower the priority class, the CCA starting point is unchanged, the longer the CCA duration, the larger the value of the transmission duration, the number of the LBT symbols is unchanged, and the TB size is unchanged. The lower the priority class, the CCA starting point is unchanged, the longer the CCA duration, the larger the value of the transmission duration, the number of the LBT symbols is unchanged, and the larger the TB size. The lower the priority class, the CCA starting point is unchanged, the longer the CCA duration, the larger the value of the transmission duration, the number of the LBT symbols is unchanged, and the smaller the TB size. The lower the priority class, the CCA starting point is unchanged, the longer the CCA duration, the larger the value of the transmission duration, the larger the number of the LBT symbols, and the TB size is unchanged. The lower the priority class, the CCA starting point is unchanged, the longer the CCA duration, the larger the value of the transmission duration, the larger the number of the LBT symbols, and the larger the TB size. The lower the priority class, the CCA starting point is unchanged, the longer the CCA duration, the larger the value of the transmission duration, the larger the number of the LBT symbols, and the smaller the TB size. The lower the priority class, the CCA starting point is unchanged, the longer the CCA duration, the larger the value of the transmission duration, the smaller the number of the LBT symbols, and the TB size is unchanged. The lower the priority class, the CCA starting point is unchanged, the longer the CCA duration, the larger the value of the transmission duration, the smaller the number of the LBT symbols, and the larger the TB size. The lower the priority class, the CCA starting point is unchanged, the longer the CCA duration, the larger the value of the transmission duration, the smaller the number of the LBT symbols, and the smaller the TB size. The lower the priority class, the CCA starting point is unchanged, the CCA duration is unchanged, the larger the value of the transmission duration, the number of the LBT symbols is unchanged, and the TB size is unchanged. The lower the priority class, the CCA starting point is unchanged, the CCA duration is unchanged, the larger the value of the transmission duration, the number of the LBT symbols is unchanged, and the larger the TB size. The lower the priority class, the CCA starting point is unchanged, the CCA duration is unchanged, the larger the value of the transmission duration, the number of the LBT symbols is unchanged, and the smaller the TB size. The lower the priority class, the CCA starting point is unchanged, the CCA duration is unchanged, the larger the value of the transmission duration, the larger the number of the LBT symbols, and the TB size is unchanged. The lower the priority class, the CCA starting point is unchanged, the CCA duration is unchanged, the larger the value of the transmission duration, the larger the number of the LBT symbols, and the larger the TB size. The lower the priority class, the CCA starting point is unchanged, the CCA duration is unchanged, the larger the value of the transmission duration, the larger the number of the LBT symbols, and the smaller the TB size. The lower the priority class, the CCA starting point is unchanged, the CCA duration is unchanged, the larger the value of the transmission duration, the smaller the number of the LBT symbols, and the TB size is unchanged. The lower the priority class, the CCA starting point is unchanged, the CCA duration is unchanged, the larger the value of the transmission duration, the smaller the number of the LBT symbols, and the larger the TB size. The lower the priority class, the CCA starting point is unchanged, the CCA duration is unchanged, the larger the value of the transmission duration, the smaller the number of the LBT symbols, and the smaller the TB size. The lower the priority class, the larger the number of times of HARQ retransmission. The lower the priority class, the smaller the number of times of HARQ retransmission. The lower the priority class, the larger the maximum contention window. The lower the priority class, the larger the minimum contention window. Or the lower the priority class, the larger the maximum contention window, and the larger the minimum contention window. It is to be noted that an increase in the CCA duration described above may be implemented in multiple manners, for example, in at least one of the following manners: increasing m while keeping idle CCA duration unchanged; increasing the idle CCA duration while keeping m unchanged; and increasing both the idle CCA duration and m.

Optionally, before the channel access of the unlicensed carrier is performed according to the CCA parameter matching the determined priority class and used for performing the CCA detection before access to the unlicensed carrier, a step described below is further included. At least one of a subframe position and a reserved symbol index for performing the CCA is obtained in multiple manners, for example, in at least one of the following manners: in a predefined manner; an agreement in advance between a base station and a UE on at least one of the subframe position and the reserved symbol index; configuration of a predetermined position in a transmission subframe with high-layer RRC signaling; configuration of an end position of downlink transmission with the high-layer RRC signaling; configuration of a CCA time domain pattern with the high-layer RRC signaling; configuration with physical layer specific DCI signaling, common DCI signaling or newly designed DCI signaling ; and joint configuration with the high-layer RRC signaling and the physical layer specific DCI signaling, common DCI signaling or newly designed DCI signaling joint.

The common DCI signaling or newly designed DCI signaling is used to obtain at least one of the subframe position and the reserved symbol index in one of the manners described below. In a first manner, one or more bits of Y reserved bits in a LAA subframe configuration branch in the common DCI signaling are used to indicate at least one of: the subframe position of the reserved symbol used to perform the CCA, a CCA position, a CCA vacant symbol index, an interval of the CCA and the CCA starting point, where the Y is a preset number. In a second manner, one or more bits of all bits in the newly designed DCI signaling or a new branch in the common DCI signaling are used to indicate at least one of: the subframe position of the reserved symbol used to perform the CCA detection, the CCA position, the CCA vacant symbol index, the interval of the CCA detection and the CCA starting point.

For the specific DCI signaling, bits of a field unused by the specific DCI signaling may be reused to indicate at least one of: the subframe position of the reserved symbol used to perform the CCA, the CCA position, the number of CCA vacant symbols, the interval of the CCA and the CCA starting point.

Optionally, the step in which the channel access of the unlicensed carrier is performed according to the CCA parameter matching the determined priority class and used for performing a CCA detection before access to the unlicensed carrier may include: receiving uplink grant information transmitted by a base station; performing the CCA detection before a position determined according to a predetermined timing relationship; and when the CCA detection succeeds, transmitting uplink data or a SRS to the base station. After the uplink grant information transmitted by the base station is received, or the CCA detection is performed before the position determined according to the predetermined timing relationship, whether the uplink grant information is successfully received and whether the CCA detection succeeds may further be fed back to the base station.

For example, after the uplink grant information transmitted by the base station is received, indication information used to indicate whether the uplink grant information is successfully received by the UE is further transmitted on the licensed carrier or unlicensed carrier, for example, at least one of the steps described below is included. The first indication information is transmitted at the first predetermined position on the licensed carrier, where the first indication information is used to indicate that the UE has received the uplink grant information transmitted by the base station; and the first indication information is transmitted at the second predetermined position after succeeding in contention for a use right of the unlicensed carrier through the CCA detection. Also for example, after the CCA detection is performed before a position determined according to the predetermined timing relationship, indication information used to indicate whether the CCA detection is performed by the UE is further transmitted on the licensed carrier or unlicensed carrier, for example, at least one of the steps described below is included. The second indication information is transmitted at the third predetermined position on the licensed carrier, where the second indication information is used to indicate execution result information of the CCA detection performed by the UE, and the execution result information includes: success or failure in the CCA detection; and the second indication information is transmitted at the fourth predetermined position after succeeding in contention for the use right of the unlicensed carrier through the CCA detection.

At least one of the first predetermined position, the second predetermined position, the third predetermined position and the fourth predetermined position is obtained using at least one of: an agreement in advance between the base station and the UE; configuration with base station specific DCI signaling, common DCI signaling or newly designed DCI signaling configuration; high-layer RRC signaling; and CCA success position implicit indication.

Optionally, at least one of the above-mentioned first predetermined position, second predetermined position, third predetermined position and fourth predetermined position each may include multiple types, for example, at least one of: a predefined position; a position determined according to a predetermined timing relationship n+k, where n is a subframe index of DCI, and k is an integer greater than or equal to 1 or an integer greater than or equal to 4; the first uplink subframe; the first uplink subframe in an uplink burst transmission; a subframe, on the licensed carrier, having the same position as a scheduling resource corresponding to the unlicensed carrier; and the first subframe after the CCA succeeds.

The first indication information or the second indication information is transmitted at a symbol position of at least one of: a predetermined symbol, the first symbol, the last symbol, the third symbol in the first half slot, the fifth symbol in the first half slot, the third symbol in the second half slot, the fifth symbol in the second half slot, the fourth symbol in the first half slot, and the fourth symbol in the second half slot, where a symbol position. The first indication information and the second indication information are transmitted at different symbol positions.

In conjunction with the above-mentioned embodiments and specific problematic scenarios, optional implementation modes for solving the above-mentioned problems are further provided in the embodiments of the present invention. To solve the problems in the existing art, the problems of the LAA are first analyzed below.

Problem 1: According to different service types, a correspondence rule between a specific service type priority class and the LBT mechanism or related detail parameters needs to be specified. If the priorities corresponding to different downlink (DL) service types are directly used for the uplink and because the uplink LBT is performed with limited symbols, scheduling mechanisms, transmission duration, and the like, obviously the downlink priority class and parameter configuration will cause few opportunities of uplink channel access and a waste of allocated scheduling resources and uplink (UL) grant signaling indication, which results in poor uplink system performance. Therefore, the problem 1 needs to be solved.

Problem 2: With multiple priority class reused transmissions, detailed reuse principles need to be considered. Based on the problem 1, when multiple different priority services are transmitted at the same time, a set of reuse principles are required.

Problem 3: For an uplink multi-subframe scheduling and single-subframe scheduling hybrid scenario, at least one of a flexible or suitable CCA mechanism and subframe structure indication signaling needs to be designed, to reduce the loss when the CCA is performed by the UE and improve the uplink resource utilization.

Problem 4: It needs to be identified whether the UE side misses the UL grant, whether the CCA is blocked due to the channel occupied, or whether the uplink data transmission fails. If the problem 4 is not solved, the base station may indicate incorrectly to increase LBT contention window signaling, so that the difficulty of accessing the channel on the UE side is increased, and multiple UE scheduling policies of the base station in the time-frequency domain is affected, which may result in a HARQ buffer.

Based on the above problems and analysis, if the above problems are not solved well, the access probability of a high-priority service or channel is affected to some extent, and uplink resources and uplink grant indication information which are allocated to the UE are wasted, which affects the performance of the entire uplink system. In view of this, the embodiments of the present invention provide a priority configuration method and apparatus on an unlicensed carrier. By using the method and apparatus, to some extent, a high channel access opportunity is given to services or channels with more requirements. This reduces a waste of the uplink resources and grant indication information which are allocated to the UE by the base station. In addition, the loss when the CCA is performed by the UE is reduced at the same time.

Different aspects of the above various problems are considered and illustrated respectively and correspondingly in the optional embodiments described below. The optional implementation modes described below generally include the content described below. (1) At least one relationship between different priorities and LBT mechanisms, related parameters in corresponding LBT mechanisms, a LBT starting point, uplink transmission duration, the number of LBT symbols, or a TB size are established. (2) Based on the relationship between the different priorities and parameters established in (1), the UL grant or the SRS is configured to be a higher optional level, and the transmission duration may be at a symbol level. (3) When multiple different priorities are included in the PMSCH transmission, a reuse rule is designed. (4) Based on a multi-subframe scheduling and single-subframe scheduling hybrid scenario, signaling indicating the position of the CCA is designed. (5) A CCA failure indication process is provided. Each optional embodiment will be respectively described below.

Optional embodiment 1

In this embodiment, when a LBT Cat2 mechanism is adopted for an uplink channel access on an unlicensed carrier, a correspondence relationship between the specific parameter configuration at the LBT Cat2 and at least one of different service types and signal types is established.

Firstly the parameter composition in the LBT Cat2 mechanism and a time domain structure of the parameters are introduced.

The LBT Cat2, also called one-shot LBT, refers to that when the detection channel is from busy to idle, and the continuous idle duration of the detection channel is at least as long as the CCA duration, it is considered that a use right of the unlicensed carrier is obtained or the LBT is performed successfully.

The CCA duration length may include a idle CCA duration length and m sense CCA duration lengths. The specific CCA duration time domain structure may be one of: idle CCA duration + m * sense CCA duration; m * sense CCA duration + idle CCA duration; or, m1 * sense CCA duration + idle CCA duration + m2 * sense CCA duration. The idle CCA duration refers to a length of time during which the CCA detection is not performed, or during which a transmission device receives related information or functions like receiving, transmitting and converting are performed and the channel sensing or channel busy-idle detection is not performed. The sense CCA duration refers to that the transmission apparatus needs to perform the channel idle detection during this time. The sense CCA duration may include a length of time A and an actual length of detection time B. The time domain structure of the sense CCA duration may be one of: A + B; and B + A.

Optionally, the idle CCA duration length is fixed or variable, and may optionally be configured as 16 $\mu$s. m is an integer greater than or equal to 0, and optionally m is 0, 1 or 2. A length of the sense CCA duration is 9 $\mu$s. A is 5 $\mu$s, and B is 4 $\mu$s. Alternatively, A is 4 $\mu$s, and B is 5 $\mu$s.

The CCA starting point is defined below. From a perspective of unlink multi-user reuse and according to that the PUSCH starts from a subframe boundary, a symbol boundary, or a slot boundary, the defined CCA starting point is sequentially the subframe boundary, the symbol boundary at which the PUSCH transmission starts, or a time point which is a length of CCA duration before the slot boundary at which the PUSCH transmission starts. From a perspective of increasing the probability of accessing the channel, the CCA starting point may be set as a starting point when the CCA is performed in a region, any time or a specific time point when the CCA is performed in the region, a time point which is the length of Gap after an ending point of downlink transmission, or the ending point of the downlink transmission. The specific time point is, in the CCA interval, a starting point of each segment divided from the CCA duration.

The number of continuously transmitted subframes refers to the number of continuously scheduled subframes of the UE.

In addition to the above parameters related to the LBT Cat2, like the CCA duration, the idle CCA duration, the sense CCA duration, the CCA starting point, a CCA end point, the single-subframe scheduling and the number of continuously transmitted subframes (also referred to as continuously scheduling subframes), the uplink transmission burst length, the TB size, the LBT region length (or the number of symbols), and the number of times of HARQ retransmission may also be included.

The priority class includes two types. One is a service type; and the other is a channel or signal type. The service type includes: voice, video, best effort and background. The signal and the type thereof include at least one of: an UL grant, SRS, PRACH, PUCCH, and PUSCH signal, and these signals and the priority therebetween may be determined according to different needs and scenarios.

Different priority classes correspond to different parameter sets at the LBT Cat2, which will be described in detail below.

Case 1: The priority class is only related to the CCA starting point and the CCA duration length at the LBT Cat2. Details are listed in Table 1 below.

Table 1

| Class | CC starting point | CCA duration |
|---|---|---|
| 1 (highest) | First preset value | Fixed value |
| 2 (second highest) | Second preset value | Fixed value |
| 3 | Third preset value | Fixed value |
| 4 (lowest) | Fourth preset value | Fixed value |

The first preset value, the second preset value, the third preset value, and the fourth preset value in Table 1 may be the same value, or may be sequentially increased values. That is, the starting point at which the latter performs a CCA is later than the starting point at which the former performs a CCA. When the CCA starting points corresponding to different priority classes are the same, the CCA starting point may be the symbol boundary, the subframe boundary, a starting boundary at which the CCA detection is performed in a region, or a certain starting boundary of one of equally-spaced small segments in the CCA detection region. When the CCA starting points corresponding to different priority classes are different, the CCA starting point of the previous priority is earlier than the CCA starting point of the latter priority as the priority class decreases. The different CCA starting points corresponding to different priorities may be the starting positions of different equally-spaced small segments in the CCA detection region, or random or arbitrary positions of different equally-spaced small segments in the CCA detection region. The CCA duration corresponds to a fixed value of at least 16 $\mu$s, for example, to one of 16 $\mu$s, 25 $\mu$s, 34 $\mu$s, 43 $\mu$s, and the like.

For example, for different priority classes, the corresponding CCA starting point is unchanged, and the CCA duration is unchanged. See Table 2.

Table 2

| Class | CCA starting point | CCA duration |
|---|---|---|
| 1 (highest) | Starting boundary or preset position in a CCA detection region | 25 $\mu$s/34 $\mu$s/43 $\mu$s |
| 2 (second highest) | Starting boundary or preset position in the CCA detection region | 25 $\mu$s/34 $\mu$s/43 $\mu$s |
| 3 | Starting boundary or preset position in the CCA detection region | 25 $\mu$s/34 $\mu$s/43 $\mu$s |
| 4 (lowest) | Starting boundary or preset position in the CCA detection region | 25 $\mu$s/34 $\mu$s/43 $\mu$s |

For example, as the priority class decreases, the CCA starting point of the previous priority is earlier than the CCA starting point of the latter priority (the position of the CCA is fixed), and the CCA duration is unchanged. FIG. 3 is a schematic diagram illustrating CCA starting points corresponding to different priority classes according to an embodiment of the present invention. In other words, FIG. 3 is a schematic diagram illustrating CCA starting points corresponding to different priority classes by assuming that the CCA detection region occupies one symbol. See Table 3.

Table 3

| Class | CCA starting point | CCA duration |
|---|---|---|
| 1 (highest) | Symbol boundary, A1 in FIG. 1 | 25 $\mu$s/34 $\mu$s/43 $\mu$s |
| 2 (second highest) | A2 in FIG. 1 | 25 $\mu$s/34 $\mu$s/43 $\mu$s |
| 3 | A3 in FIG. 1 | 25 $\mu$s/34 $\mu$s/43 $\mu$s |
| 4 (lowest) | A4 in FIG. 1 | 25 $\mu$s/34 $\mu$s/43 $\mu$s |

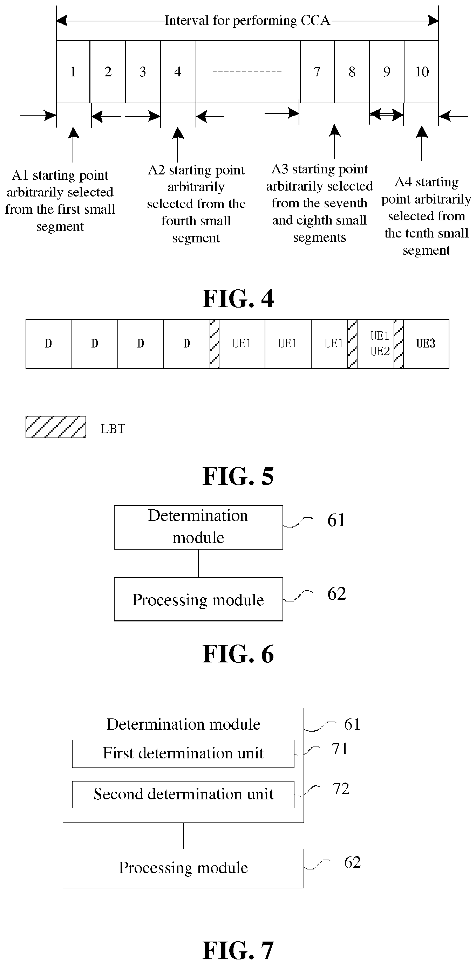

For example, as the priority class decreases, the CCA starting point of the previous priority is earlier than the CCA starting point of the latter priority (the position of the CCA starting point is not fixed), and the CCA duration is unchanged. FIG. 4 is a schematic diagram illustrating arbitrary selection of CCA starting points in intervals corresponding to different priority classes according to an embodiment of the present invention. In other words, FIG. 4 is a schematic diagram illustrating CCA starting points corresponding to different priority classes by assuming that the CCA detection region occupies one symbol. See Table 4.

Table 4

| Class | CCA starting point | CCA duration |
|---|---|---|
| 1 (highest) | Symbol boundary, A1 in FIG. 2 | 25 $\mu$s/34 $\mu$s/43 $\mu$s |
| 2 (second highest) | A2 in FIG. 2 | 25 $\mu$s/34 $\mu$s/43 $\mu$s |
| 3 | A3 in FIG. 2 | 25 $\mu$s/34 $\mu$s/43 $\mu$s |
| 4 (lowest) | A4 in FIG. 2 | 25 $\mu$s/34 $\mu$s/43 $\mu$s |

For example, as the priority class decreases, the CCA starting point is unchanged, and the CCA duration is increased. See Table 5.

Table 5

| Class | CCA starting point | CCA duration |
|---|---|---|
| 1 (highest) | Starting boundary or preset position in the CCA detection region | 16 μs |
| 2 (second highest) | Starting boundary or preset position in the CCA detection region | 25 μs |
| 3 | Starting boundary or preset position in the CCA detection region | 34 μs |
| 4 (lowest) | Starting boundary or preset position in the CCA detection region | 43 μs |

For example, as the priority class decreases, the CCA starting point of the previous priority is earlier than the CCA starting point of the latter priority, and the CCA duration is increased. See Table 6.

Table 6

| Class | CCA starting point | CCA duration |
|---|---|---|
| 1 (highest) | Symbol boundary, A1 in FIG. 1 | 16 μs |
| 2 (second highest) | A2 in FIG. 1 | 25 μs |
| 3 | A3 in FIG. 1 | 34 μs |
| 4 (lowest) | A4 in FIG. 1 | 43 μs |

For case 1, the CCA duration parameter may be determined according to a certain relationship between idle CCA duration and m. That is, CCA duration = idle CCA duration + m * sense CCA duration. The idle CCA duration length is fixed or variable and may be configured as 4μs, 5μs, 7μs, 9μs, 16μs, or 25μs. m is an integer greater than or equal to 0. Optionally, m may be 1, 2, 3, 4 or 5. m may be a fixed or variable value. A length of the sense CCA duration is 9 μs and may include A and B. For example, A is 5 μs, and B is 4 μs. Alternatively, A is 4 μs, and B is 5 μs. The CCA duration parameter in the above table may be replaced by idle CCA duration and m, that is, the CCA duration is dynamically adjusted or determined by changing a value of the idle CCA duration or m. For example, Table 6 is taken as an example. For details, see Table 7.

Table 7

| Class | CCA starting point | CCA duration | idle CCA duration | m |
|---|---|---|---|---|
| 1 (highest) | Symbol boundary, A1 in FIG. 1 | 16 μs | 16 μs | 0 |
| 2 (second highest) | A2 in FIG. 1 | 25 μs | 16 μs | 1 |
| 3 | A3 in FIG. 1 | 34 μs | 16 μs | 2 |
| 4 (lowest) | A4 in FIG. 1 | 43 μs | 16 μs | 3 |

The CCA duration parameter in each table of case 1 may be replaced by idle CCA duration and m, that is, the CCA duration is dynamically adjusted or determined by changing the value of the idle CCA duration or m.

Case 2: The priority class is related to the CCA starting point, the CCA duration length or MCOT_U at the LBT Cat2. MCOT_U may refer to separate uplink transmission duration, or remaining duration after downlink data is transmitted by the base station during an occupation period of the base station. The duration may be at a subframe level, or at a symbol level.

For example, as the priority class decreases, the CCA starting point is unchanged, the CCA duration is increased, and MCOT_U duration is increased. See Table 8.

Table 8

| Class | CCA starting point | CCA duration | MCOT_U |
|---|---|---|---|
| 1 (highest) | First preset value | 16 μs | 0.5 ms |
| 2 (second highest) | First preset value | 25 μs | 1 ms |
| 3 | First preset value | 34 μs | 1.5 ms or 2ms |

(continued)

| Class | CCA starting point | CCA duration | MCOT_U |
|---|---|---|---|
| 4 (lowest) | First preset value | 43 μs | 2ms or 4ms |

For example, as the priority class decreases, the CCA starting point of the previous priority is earlier than the CCA starting point of the latter priority, the CCA duration is unchanged, and the MCOT_U duration is increased. See Table 9.

Table 9

| Class | CCA starting point | CCA duration | MCOT_U |
|---|---|---|---|
| 1 (highest) | A1 in FIG. 1 or 2 | 25 μs | 0.5ms |
| 2 (second highest) | A2 in FIG. 1 or 2 | 25 μs | 1ms |
| 3 | A3 in FIG. 1 or 2 | 25 μs | 1.5 ms or 2 ms |
| 4 (lowest) | A4 in FIG. 1 or 2 | 25 μs | 2 ms or 4 ms |

In addition to the CCA starting points shown in FIGS. 3 and 4, the CCA detection starting point may also not be limited. The CCA starting point is not limited in LBT mechanisms similar to the DRS. The priority class 1 or 2 in the table may be used for the CCA parameter used when the UL grant is transmitted by the base station, and the transmission duration may also be less than 1 ms. Or, the priority class 1 or 2 in the table may also be used for the separate SRS transmission.

For case 2, only typical examples are given in this embodiment. In addition, as the priority class decreases, a combination of parameters like the CCA starting point, the CCA duration length, and the MCOT_U which may be increased or decreased is also within the scope of the present invention.

For case 2, as the priority class decreases, the corresponding CCA starting point is sequentially pushed back, and the CCA duration and MCOT_U are unchanged; as the priority class decreases, the corresponding CCA starting point is sequentially pushed back, the MCOT_U value is sequentially increased, and the CCA duration is unchanged; or, as the priority class decreases, the corresponding CCA starting point is sequentially pushed back, the CCA duration is increased, and the MCOT_U value is sequentially increased. In this case, an increase in the CCA duration may be divided into three types: The idle CCA duration is unchanged, and m is increased; the idle CCA duration is increased, and m is unchanged; or the idle CCA duration is increased, and m is increased.

In another aspect of case 2, as the priority class decreases, the CCA starting point is unchanged, and the CCA duration or the MCOT_U value may be changed. Specifically, as the priority class decreases, the CCA starting point is unchanged, the CCA duration is increased, and the MCOT_U value is unchanged; as the priority class decreases, the CCA starting point is unchanged, the CCA duration is increased, and the MCOT_U value is increased; or as the priority class decreases, the CCA starting point is unchanged, the CCA duration is unchanged, and the MCOT_U value is increased. An increase in the CCA duration may be further divided into three types: The idle CCA duration is unchanged, and m is increased; the idle CCA duration is increased, and m is unchanged; or, the idle CCA duration is increased, and m is increased.

For various situations in case 2, if not in collision, the parameters at the LBT Cat2 in different priorities may be arbitrarily combined for configuration.

For example: for different service types (priority 1 in the table below), channels or signals (priority 2 in the table below), the parameter configuration at the LBT Cat2 (the configuration in the table below is for the case in which the CCA starting point is unchanged, the idle CCA duration is unchanged, m is increased, and MCOT_U is increased.) is listed in Table 10 below.

Table 10

| Class | Priority 1 | Priority 2 | CCA starting point | idle CCA duration | m | MCOT_U |
|---|---|---|---|---|---|---|
| 1 (highest) | Voice | UL grant or SRS | First preset value | 16 μs | 1 | < C1 ms |
| 2 (second highest) | Video | PRACH | First preset value | 16 μs | 1 | > C1 ms and <= C2 ms |

(continued)

| Class | Priority 1 | Priority 2 | CCA starting point | idle CCA duration | m | MCOT_U |
|---|---|---|---|---|---|---|
| 3 | Best effort | PUCCH | First preset value | 16 μs | 2 | > C2 ms and <= C3 ms |
| 4 (lowest) | Background | PUSCH | First preset value | 16 μs | 2 | > C3 ms and <= C4 ms |

The preset starting point in Table 10 may be notified to the UE by the base station through the physical layer signaling or high-layer signaling, or be agreed on in advance between the base station and the UE. The physical layer signaling includes: UE specific DCI or common DCI. The high-layer signaling may be configured to the UE through the RRC signaling. C1, C2, C3, and C4 in the table may be less than 1 ms (for example, duration of one or more symbols), may be values that satisfy the uplink maximum transmission duration specified in the regulation, such as 4 ms, may be the maximum value of the remaining time after the downlink data is transmitted during the occupation period of the base station, for example, C1 may be 0.25 ms, C2 is 0.5 ms, C3 is 0.75 ms, C4 is 1 ms; or C1 may be 0.5 ms, C2 is 1 ms, C3 is 2 ms and C4 is 3 ms or 4 ms, or is the maximum value of DL occupation period minus DL transmission duration. According to the current protocol, the maximum DL occupation period is as listed in Table 11 below.

Table 11

| LBT priority class | CWmin | CWmax | n | MCOT | Set of CW sizes |
|---|---|---|---|---|---|
| 1 | 3 | 7 | 1 | 2 ms | {3, 7} |
| 2 | 7 | 15 | 1 | 3 ms | {7, 15} |
| 3 | 15 | 63 | 3 | 10 or 8 ms | {15, 31, 63} |
| 4 | 15 | 1023 | 7 | 10 or 8 ms | {15, 31, 63, 127, 255, 511, 1023} |

Case 3: The priority class is related to the CCA starting point, the CCA duration length, MCOT_U or the number of LBT symbols at the LBT Cat2. MCOT_U may refer to the separate uplink transmission duration, or the remaining duration after the downlink data is transmitted by the base station during an occupation period of the base station. The duration may be at a subframe level, or at a symbol level.

For example, as the priority class decreases, the CCA starting point is unchanged, the CCA duration is increased, the MCOT_U duration is increased, and the number of the LBT symbols is unchanged. See Table 12.

Table 12

| Class | CCA starting point | CCA duration | MCOT_U | The number of LBT symbols |
|---|---|---|---|---|
| 1 (highest) | First preset value | 16 μs | 0.5 ms or 1 ms | One symbol |
| 2 (second highest) | First preset value | 25 μs | 1ms | One symbol |
| 3 | First preset value | 34 μs | 1 ms, 1.5 ms or 2 ms | One symbol |
| 4 (lowest) | First preset value | 43 μs | 2 ms or 4 ms | One symbol |

For example, as the priority class decreases, the CCA starting point is unchanged, the CCA duration is increased, the MCOT_U duration is increased, and the number of the LBT symbols is changed. See Table 13.

Table 13

| Class | CCA starting point | CCA duration | MCOT_U | The number of LBT symbols |
|---|---|---|---|---|
| 1 (highest) | First preset value | 16 μs | 0.5 ms or 1 ms | One symbol |
| 2 (second highest) | First preset value | 25 μs | 1 ms | One symbol |
| 3 | First preset value | 34 μs | 1 ms, 1.5 ms or 2 ms | One or two symbols |
| 4 (lowest) | First preset value | 43 μs | 2 ms or 4 ms | One or two symbols |

For example, as the priority class decreases, the CCA starting point is unchanged, the CCA duration is unchanged, the MCOT_U duration is increased, and the number of the LBT symbols is changed. See Table 14.

Table 14

| Class | CCA starting point | CCA duration | MCOT U | The number of LBT symbols |
|---|---|---|---|---|
| 1 (highest) | First preset value | 16 μs, 25 μs or 34 μs | 0.5 ms or 1 ms | One symbol |
| 2 (second highest) | First preset value | 16 μs, 25 μs or 34 μs | 1 ms | One symbol |
| 3 | First preset value | 16 μs, 25 μs or 34 μs | 1 ms, 1.5 ms or 2 ms | One or two symbols |
| 4 (lowest) | First preset value | 16 μs, 25 μs or 34 μs | 2 ms or 4 ms | One or two symbols |

For example, as the priority class decreases, the CCA starting point of the previous priority is earlier than the CCA starting point of the latter priority, the CCA duration is unchanged, the MCOT_U duration is increased, and the number of the LBT symbols is changed. See Table 15.

Table 15

| Class | CCA starting point | CCA duration | MCOT_U | The number of LBT symbols |
|---|---|---|---|---|
| 1 (highest) | A1 in FIG. 1 or 2 | 16 μs, 25 μs or 34 μs | 0.5 ms or 1 ms | One symbol |
| 2 (second highest) | A2 in FIG. 1 or 2 | 16 μs, 25 μs or 34 μs | 1 ms | One symbol |
| 3 | A3 in FIG. 1 or 2 | 16 μs, 25 μs or 34 μs | 1 ms, 1.5 ms or 2 ms | One or two symbols |
| 4 (lowest) | A4 in FIG. 1 or 2 | 16 μs, 25 μs or 34 μs | 2 ms or 4 ms | One or two symbols |

In addition to the CCA starting points shown in FIGS. 3 and 4, the CCA detection starting point may also not be limited. The CCA starting point is not limited in LBT mechanisms similar to the DRS. The priority class 1 or 2 in the table may be used for the CCA parameter used when the UL grant is transmitted by the base station, and the transmission duration may also be less than 1 ms. Or, the priority class 1 or 2 in the table may also be used for the separate SRS transmission.
For case 3, only typical examples are given in this embodiment. In addition, as the priority class decreases, a combination of parameters like the CCA starting point, the CCA duration length, the MCOT_U and the number of LBT symbols which may be increased or decreased is also within the scope of the present invention. Table 15 is taken as an example to illustrate that CCA duration may be replaced by idle CCA duration and m. See Table 16.

Table 16

| Class | CCA starting point | idle CCA duration | m | MCOT_U | The number of LBT symbols |
|---|---|---|---|---|---|
| 1 (highest) | A1 in FIG. 1 or 2 | 7 μs or 16 μs | 1, 0, 2 or 3 | 0.5 ms or 1 ms | One symbol |
| 2 (second highest) | A2 in FIG. 1 or 2 | 7 μs or 16 μs | 1, 0, 2 or 3 | 1 ms | One symbol |
| 3 | A3 in FIG. 1 or 2 | 7 μs or 16 μs | 1, 0, 2 or 3 | 1 ms, 1.5 ms or 2 ms | One or two symbols |
| 4 (lowest) | A4 in FIG. 1 or 2 | 7 μs or 16 μs | 1, 0, 2 or 3 | 2 ms or 4 ms | One or two symbols |

For case 3, as the priority decreases, the corresponding CCA starting point is sequentially pushed back, the CCA duration is unchanged, the MCOT_U is unchanged and the number of LBT symbols is unchanged. Or, as the priority decreases, the corresponding CCA starting point is sequentially pushed back, the CCA duration is unchanged, the MCOT_U is unchanged and the number of LBT symbols is increased. Or, as the priority decreases, the corresponding CCA starting point is sequentially pushed back, the CCA duration is unchanged, the MCOT_U is unchanged and the number of LBT symbols is decreased. Or, as the priority decreases, the corresponding CCA starting point is sequentially pushed back, the MCOT_U value is sequentially increased, the CCA duration is unchanged, and the number of LBT symbols is unchanged. Or, as the priority decreases, the corresponding CCA starting point is sequentially pushed back, the MCOT_U value is sequentially increased, the CCA duration is unchanged, and the number of LBT symbols is increased. Or, as the priority decreases, the corresponding CCA starting point is sequentially pushed back, the MCOT_U value is sequentially increased, the CCA duration is unchanged, and the number of LBT symbols is decreased. Or, as the priority decreases, the corresponding CCA starting point is sequentially pushed back, the CCA duration is increased, the MCOT_U value is sequentially increased, and the number of LBT symbols is unchanged. Or, as the priority decreases, the corresponding CCA starting point is sequentially pushed back, the CCA duration is increased, the MCOT_U value is sequentially increased, and the number of LBT symbols is increased. Or, as the priority decreases, the corresponding CCA starting point is sequentially pushed back, the CCA duration is increased, the MCOT_U value is sequentially increased, and the number of LBT symbols is decreased. In this case, an increase in the CCA duration may be divided into three types: The idle CCA duration is unchanged, and m is increased; the idle CCA duration is increased, and m is unchanged; or the idle CCA duration is increased, and m is increased.

In another aspect of case 3, as the priority class decreases, the CCA starting point is unchanged, and the CCA duration, the MCOT_U value, and the number of LBT symbols may be changed. Specifically, as the priority class decreases, the CCA starting point is unchanged, the CCA duration is increased, the MCOT_U value is unchanged, and the number of the LBT symbols is unchanged. Or, as the priority class decreases, the CCA starting point is unchanged, the CCA duration is increased, the MCOT_U value is unchanged, and the number of the LBT symbols is increased. As the priority class decreases, the CCA starting point is unchanged, the CCA duration is increased, the MCOT_U value is unchanged, and the number of the LBT symbols is decreased. Or, as the priority class decreases, the CCA starting point is unchanged, the CCA duration is increased, the MCOT_U value is increased, and the number of the LBT symbols is unchanged. Or, as the priority class decreases, the CCA starting point is unchanged, the CCA duration is increased, the MCOT_U value is increased, and the number of the LBT symbols is increased. Or, as the priority class decreases, the CCA starting point is unchanged, the CCA duration is increased, the MCOT_U value is increased, and the number of the LBT symbols is decreased. Or, as the priority class decreases, the CCA starting point is unchanged, the CCA duration is unchanged, the MCOT_U value is increased, and the number of the LBT symbols is unchanged. Or, as the priority class decreases, the CCA starting point is unchanged, the CCA duration is unchanged, the MCOT_U value is increased, and the number of the LBT symbols is increased. Or, as the priority class decreases, the CCA starting point is unchanged, the CCA duration is unchanged, the MCOT_U value is increased, and the number of the LBT symbols is decreased. In this case, an increase in the CCA duration may be divided into three types: The idle CCA duration is unchanged, and m is increased; the idle CCA duration is increased, and m is unchanged; or the idle CCA duration is increased, and m is increased. Case 4: The priority class is related to the CCA starting point, the CCA duration length, MCOT_U, the number of the LBT symbols or a TB size at the LBT Cat2. MCOT_U may refer to the separate uplink transmission duration, or the remaining duration after the downlink data is transmitted by the base station during an occupation period of the base station. The duration may be at a sub frame level, or at a symbol level. As for the TB size, once the channel is preempted by a certain priority class, only the corresponding TB size can be used.

For example, as the priority class decreases, the CCA starting point is unchanged, the CCA duration is increased, the MCOT_U duration is increased, the number of the LBT symbols is unchanged, and the TB size is increased. See Table 17.

Table 17

| Class | CCA starting point | CCA duration | MCOT_U | The number of LBT symbols | TB size/Information size |
|---|---|---|---|---|---|
| 1 (highest) | First preset value | 16 $\mu$s | 0.5 ms or 1 ms | One symbol | First resource block |
| 2 (second highest) | First preset value | 25 $\mu$s | 1 ms | One symbol | Second resource block |
| 3 | First preset value | 34 $\mu$s | 1 ms, 1.5 ms or 2 ms | One symbol | Third resource block |
| 4 (lowest) | First preset value | 43 $\mu$s | 2 ms or 4 ms | One symbol | Fourth resource block |

In Table 17, the first resource block size is smaller than the second resource block size, or smaller than or equal to the second resource block size; the second resource block size is smaller than the third resource block size, or smaller than or equal to the third resource block size; and the third resource block size is smaller than the fourth resource block size, or smaller than or equal to the fourth resource block size. Or, these four resource block sizes are reduced in sequence.

For example, as the priority class decreases, the CCA starting point is unchanged, the CCA duration is unchanged, the MCOT_U duration is increased, the number of the LBT symbols is changed, and the TB size is changed. See Table 18.

Table 18

| Class | CCA starting point | CCA duration | MCOT_U | The number of LBT symbols | TB size/ Information size |
|-------|--------------------|--------------|--------|---------------------------|--------------------------|
| 1 (highest) | First preset value | 16 μs, 25 μs or 34 μs | 0.5 ms or 1 ms | One symbol | First resource block |
| 2 (second highest) | First preset value | 16 μs, 25 μs or 34 μs | 1 ms | One symbol | Second resource block |
| 3 | First preset value | 16 μs, 25 μs or 34 μs | 1 ms, 1.5 ms or 2 ms | One or two symbols | Third resource block |
| 4 (lowest) | First preset value | 16 μs, 25 μs or 34 μs | 2 ms or 4 ms | One or two symbols | Fourth resource block |

For example, as the priority class decreases, the CCA starting point of the previous priority is earlier than the CCA starting point of the latter priority, the CCA duration is unchanged, the MCOT_U duration is increased, the number of the LBT symbols is changed, and the TB size is changed. See Table 19.

Table 19

| Class | CCA starting point | CCA duration | MCOT_U | The number of LBT symbols | TB size/ Information size |
|-------|--------------------|--------------|--------|---------------------------|--------------------------|
| 1 (highest) | A1 in FIG. 1 or 2 | 16 μs, 25 μs or 34 μs | 0.5 ms or 1 ms | One symbol | First resource block |
| 2 (second highest) | A2 in FIG. 1 or 2 | 16 μs, 25 μs or 34 μs | 1 ms | One symbol | Second resource block |
| 3 | A3 in FIG. 1 or 2 | 16 μs, 25 μs or 34 μs | 1 ms, 1.5 ms or 2 ms | One or two symbols | Third resource block |
| 4 (lowest) | A4 in FIG. 1 or 2 | 16 μs, 25 μs or 34 μs | 2 ms or 4 ms | One or two symbols | Fourth resource block |

In addition to the CCA starting points shown in FIGS. 3 and 4, the CCA detection starting point may also not be limited. The CCA starting point is not limited in LBT mechanisms similar to the DRS. The priority class 1 or 2 in the table may be used for the CCA parameter used when the UL grant is transmitted by the base station, and the transmission duration may also be less than 1 ms. Or, the priority class 1 or 2 in the table may also be used for the separate SRS transmission.

For case 4, as the priority decreases, the corresponding CCA starting point is sequentially pushed back, the CCA duration is unchanged, the MCOT_U is unchanged, the number of the LBT symbols is unchanged or the TB size/information size is unchanged. Or, as the priority decreases, the corresponding CCA starting point is sequentially pushed back, the CCA duration is unchanged, the MCOT_U is unchanged, the number of the LBT symbols is unchanged or the TB size/information size is increased. Or, as the priority decreases, the corresponding CCA starting point is sequentially pushed back, the CCA duration is unchanged, the MCOT_U is unchanged, the number of the LBT symbols is unchanged or the TB size/information size is reduced. Or, as the priority decreases, the corresponding CCA starting point is sequentially pushed back, the CCA duration is unchanged, the MCOT_U is unchanged, the number of the LBT symbols is increased or the TB size/information size is unchanged. Or, as the priority decreases, the corresponding CCA starting point is sequentially pushed back, the CCA duration is unchanged, the MCOT_U is unchanged, the number of the LBT symbols is increased or the TB size/information size is increased. Or, as the priority decreases, the corresponding CCA starting point is sequentially pushed back, the CCA duration is unchanged, the MCOT_U is unchanged, the number of the LBT symbols is increased or the TB size/information size is reduced. Or, as the priority decreases, the corresponding CCA starting point is sequentially pushed back, the CCA duration is unchanged, the MCOT_U is unchanged, the number of the LBT symbols is decreased or the TB size/information size is unchanged. Or, as the priority decreases, the corresponding CCA starting point is sequentially pushed back, the CCA duration is unchanged, the MCOT_U is unchanged, the number of the LBT symbols is reduced or the TB size/information size is increased. Or, as the priority decreases, the corresponding CCA starting point is sequentially pushed back, the CCA duration is unchanged, the MCOT_U is unchanged, the number of the LBT symbols is decreased or the TB size/information size is reduced. Or, as the priority decreases, the corresponding CCA starting point is sequentially pushed back, the MCOT_U value is sequentially increased, the CCA duration is unchanged, the number of the LBT symbols is unchanged or the TB size/information size is unchanged. Or, as the priority decreases, the corresponding CCA starting point is sequentially pushed back, the MCOT_U value is sequentially increased, the CCA duration is unchanged, the number of the LBT symbols is unchanged or the TB size/information size is increased. Or, as the priority decreases, the corresponding CCA starting point is sequentially pushed back, the MCOT_U value is sequentially increased, the CCA duration is unchanged, the number of the LBT symbols is unchanged or the TB size/information size is reduced. Or, as the priority decreases, the corresponding CCA starting point is sequentially pushed back, the MCOT_U value is sequentially increased, the CCA duration is unchanged, the number of the LBT symbols is increased or the TB size/information size is unchanged. Or, as the priority decreases, the corresponding CCA starting point is sequentially pushed back, the MCOT_U value is sequentially increased, the CCA duration is unchanged, the number of the LBT symbols is increased or the TB size/information size is increased. Or, as the priority decreases, the corresponding CCA starting point is sequentially pushed back, the MCOT_U value is sequentially increased, the CCA duration is unchanged, the number of the LBT symbols is increased or the TB size/information size is reduced. Or, as the priority decreases, the corresponding CCA starting point is sequentially pushed back, the MCOT_U value is sequentially increased, the CCA duration is unchanged, the number of the LBT symbols is decreased or the TB size/information size is unchanged. Or, as the priority decreases, the corresponding CCA starting point is sequentially pushed back, the MCOT_U value is sequentially increased, the CCA duration is unchanged, the number of the LBT symbols is decreased or the TB size/information size is increased. Or, as the priority decreases, the corresponding CCA starting point is sequentially pushed back, the MCOT_U value is sequentially increased, the CCA duration is unchanged, the number of the LBT symbols is decreased or the TB size/information size is reduced. Or, as the priority decreases, the corresponding CCA starting point is sequentially pushed back, the CCA duration is increased, the MCOT_U value is sequentially increased, the number of the LBT symbols is unchanged or the TB size/information size is unchanged. Or, as the priority decreases, the corresponding CCA starting point is sequentially pushed back, the CCA duration is increased, the MCOT_U value is sequentially increased, the number of the LBT symbols is unchanged or the TB size/information size is increased. Or, as the priority decreases, the corresponding CCA starting point is sequentially pushed back, the CCA duration is increased, the MCOT_U value is sequentially increased, the number of the LBT symbols is unchanged or the TB size/information size is reduced. Or, as the priority decreases, the corresponding CCA starting point is sequentially pushed back, the CCA duration is increased, the MCOT_U value is sequentially increased, the number of the LBT symbols is increased or the TB size/information size is unchanged. Or, as the priority decreases, the corresponding CCA starting point is sequentially pushed back, the CCA duration is increased, the MCOT_U value is sequentially increased, the number of the LBT symbols is increased or the TB size/information size is increased. Or, as the priority decreases, the corresponding CCA starting point is sequentially pushed back, the CCA duration is increased, the MCOT_U value is sequentially increased, the number of the LBT symbols is increased or the TB size/information size is reduced. Or, as the priority decreases, the corresponding CCA starting point is sequentially pushed back, the CCA duration is increased, the MCOT_U value is sequentially increased, the number of the LBT symbols is decreased or the TB size/information size is unchanged. Or, as the priority decreases, the corresponding CCA starting point is sequentially pushed back, the CCA duration is increased, the MCOT_U value is sequentially increased, the number of the LBT symbols is decreased or the TB size/information size is increased. Or, as the priority decreases, the corresponding CCA starting point is sequentially pushed back, the CCA duration is increased, the MCOT_U value is sequentially increased, the number of the LBT symbols is decreased or the TB size/information size is reduced.

In this case, an increase in the CCA duration may be divided into three types: The idle CCA duration is unchanged, and m is increased; the idle CCA duration is increased, and m is unchanged; or the idle CCA duration is increased, and m is increased.

In another aspect of case 4, as the priority class decreases, the CCA starting point is unchanged, and the CCA duration, the MCOT_U value, the number of the LBT symbols, or the TB size/information size may be changed. Specifically, as the priority class decreases, the CCA starting point is unchanged, the CCA duration is increased, the MCOT_U value is unchanged, the number of the LBT symbols is unchanged, or the TB size/information size is unchanged. Or, as the priority class decreases, the CCA starting point is unchanged, the CCA duration is increased, the MCOT_U value is unchanged, the number of the LBT symbols is unchanged, or the TB size/information size is increased. Or, as the priority class decreases, the CCA starting point is unchanged, the CCA duration is increased, the MCOT_U value is unchanged, the number of the LBT symbols is unchanged, or the TB size/information size is reduced. Or, as the priority class decreases, the CCA starting point is unchanged, the CCA duration is increased, the MCOT_U value is unchanged, the number of the LBT symbols is increased, or the TB size/information size is unchanged. Or, as the priority class decreases, the CCA starting point is unchanged, the CCA duration is increased, the MCOT_U value is unchanged, the number of the LBT symbols is increased, or the TB size/information size is increased. Or, as the priority class decreases, the CCA starting point is unchanged, the CCA duration is increased, the MCOT_U value is unchanged, the number of the LBT symbols is increased, or the TB size/information size is reduced. Or, as the priority class decreases, the CCA starting point is unchanged, the CCA duration is increased, the MCOT_U value is unchanged, the number of the LBT symbols is decreased, or the TB size/information size is unchanged. Or, as the priority class decreases, the CCA starting point is unchanged, the CCA duration is increased, the MCOT_U value is unchanged, the number of the LBT symbols is decreased, or the TB size/information size is increased. Or, as the priority class decreases, the CCA starting point is unchanged, the CCA duration is increased, the MCOT_U value is unchanged, the number of the LBT symbols is decreased, or the TB size/information size is reduced. Or, as the priority class decreases, the CCA starting point is unchanged, the CCA duration is increased, the MCOT_U value is increased, the number of the LBT symbols is unchanged, or the TB size/information size is unchanged. Or, as the priority class decreases, the CCA starting point is unchanged, the CCA duration is increased, the MCOT_U value is increased, the number of the LBT symbols is unchanged, or the TB size/information size is increased. Or, as the priority class decreases, the CCA starting point is unchanged, the CCA duration is increased, the MCOT_U value is increased, the number of the LBT symbols is unchanged, or the TB size/information size is reduced. Or, as the priority class decreases, the CCA starting point is unchanged, the CCA duration is increased, the MCOT_U value is increased, the number of the LBT symbols is increased, or the TB size/information size is unchanged. Or, as the priority class decreases, the CCA starting point is unchanged, the CCA duration is increased, the MCOT_U value is increased, the number of the LBT symbols is increased, or the TB size/information size is increased. Or, as the priority class decreases, the CCA starting point is unchanged, the CCA duration is increased, the MCOT_U value is increased, the number of the LBT symbols is increased, or the TB size/information size is reduced. Or, as the priority class decreases, the CCA starting point is unchanged, the CCA duration is increased, the MCOT_U value is increased, the number of the LBT symbols is decreased, or the TB size/information size is unchanged. Or, as the priority class decreases, the CCA starting point is unchanged, the CCA duration is increased, the MCOT_U value is increased, the number of the LBT symbols is decreased, or the TB size/information size is increased. Or, as the priority class decreases, the CCA starting point is unchanged, the CCA duration is increased, the MCOT_U value is increased, the number of the LBT symbols is decreased, or the TB size/information size is reduced. Or, as the priority class decreases, the CCA starting point is unchanged, the CCA duration is unchanged, the MCOT_U value is increased, the number of the LBT symbols is unchanged, or the TB size/information size is unchanged. Or, as the priority class decreases, the CCA starting point is unchanged, the CCA duration is unchanged, the MCOT_U value is increased, the number of the LBT symbols is unchanged, or the TB size/information size is increased. Or, as the priority class decreases, the CCA starting point is unchanged, the CCA duration is unchanged, the MCOT_U value is increased, the number of the LBT symbols is unchanged, or the TB size/information size is reduced. Or, as the priority class decreases, the CCA starting point is unchanged, the CCA duration is unchanged, the MCOT_U value is increased, the number of the LBT symbols is increased, or the TB size/information size is unchanged. Or, as the priority class decreases, the CCA starting point is unchanged, the CCA duration is unchanged, the MCOT_U value is increased, the number of the LBT symbols is increased, or the TB size/information size is increased. Or, as the priority class decreases, the CCA starting point is unchanged, the CCA duration is unchanged, the MCOT_U value is increased, the number of the LBT symbols is increased, and the TB size/information size is reduced. Or, as the priority class decreases, the CCA starting point is unchanged, the CCA duration is unchanged, the MCOT_U value is increased, the number of the LBT symbols is decreased, or the TB size/information size is unchanged. Or, as the priority class decreases, the CCA starting point is unchanged, the CCA duration is unchanged, the MCOT_U value is increased, the number of the LBT symbols is decreased, and the TB size/information size is increased. Or, as the priority class decreases, the CCA starting point is unchanged, the CCA duration is unchanged, the MCOT_U value is increased, the number of the LBT symbols is decreased, and the TB size/information size is reduced. In this case, an increase in the CCA duration may be divided into three types: The idle CCA duration is unchanged, and m is increased; the idle CCA duration is increased, and m is unchanged; or the idle CCA duration is increased, and m is increased.

Case 5: The priority class is related to at least one of the CCA starting point, the CCA duration length, MCOT_U, the number of the LBT symbols, the TB size, and the number of times of HARQ retransmission at the LBT Cat2. MCOT_U may refer to the separate uplink transmission duration, or the remaining duration after the downlink data is transmitted by the base station during an occupation period of the base station. The duration may be at a subframe level, or at a symbol level. As for the TB size, once the channel is preempted by a certain priority class, only the corresponding TB size can be used. The number of times of HARQ retransmission may be increased or decreased as the priority class decreases.

The priority classes in this embodiment may respectively correspond to the UL grant, the SRS, the PRACH, the PUCCH, and the PUSCH; and according to requirements, these channels or signals may be at the same priority class or at different priority classes. The four service types: voice, video, best effort, and background may also be identified sequentially. In addition, related LBT parameters corresponding to different priority classes may be deleted according to requirements. That is, the priority class may be related to at least one of: the CCA starting point, the CCA duration length, the MCOT_U, the number of the LBT symbols, the TB size, and the number of times of HARQ retransmission.

The priority classes of the UL grant, the SRS, the PRACH, the PUCCH, and the PUSCH included in the column to which the priority belongs may be combined or adjusted according to different scenarios and requirements. In the above various cases, assuming that current UL grant has a higher priority, the UL grant is transmitted to configure the parameter of the highest access opportunity at the LBT Cat2.

Only typical examples are given in this embodiment. In addition, as the priority class decreases, a combination of parameters like the CCA starting point, the CCA duration, the idle CCA duration, the m, the MCOT_U, the number of the LBT symbols and the number of times of HARQ retransmission which may be increased or decreased is also within the scope of the present invention.

Optional embodiment 2

In this embodiment, when a LBT Cat4 mechanism is adopted for an uplink channel access on an unlicensed carrier, a correspondence relationship between the specific parameter configuration at the LBT Cat4 and different service types or signal types is established.

Different priority classes correspond to different parameter sets at the LBT Cat2, which will be described in detail below.

Case 1: The priority class is related to at least one of a CCA starting point, the maximum contention window, the minimum contention window, a length of n and MCOT_U at the LBT Cat4.

For example, as the priority class decreases, the corresponding CCA starting point is unchanged, and the maximum contention window, the minimum contention window, the length of n, and the MCOT_U are changed. See Tables 20 and 21.

Table 20

| Class | CCA starting point | CWmin | CWmax | n | MCOT_U |
|---|---|---|---|---|---|
| 1 (highest) | Starting boundary or preset position in a CCA detection region | 0 | 1 | 0 | 0.5 ms |
| 2 (second highest) | Starting boundary or preset position in the CCA detection region | 1 | 2 | 0 | 1 |
| 3 | Starting boundary or preset position in the CCA detection region | 2 | 3 | 1 | 1.5 |
| 4 (lowest) | Starting boundary or preset position in the CCA detection region | 3 | 4 | 1 | 2 |

Table 21

| Class | CCA starting point | CWmin | CWmax | n | MCOT_U |
|---|---|---|---|---|---|
| 1 (highest) | Starting boundary or preset position in the CCA detection region | 0 | 1 | 0 | 0.5 ms |
| 2 (second highest) | Starting boundary or preset position in the CCA detection region | 1 | 2 | 0 | 1 ms |
| 3 | Starting boundary or preset position in the CCA detection region | 2 | 3 | 1 | 2 ms |
| 4 (lowest) | Starting boundary or preset position in the CCA detection region | 3 | 7 | 1 | 2 or 4 ms |

Table 22

| Class | CWmin | CWmax | n | MCOT_U |
|---|---|---|---|---|
| 1 (highest) | 0 | 1 | 0 | 0.5 ms or 1 ms |
| 2 (second highest) | 1 | 2 | 0 | 1 ms |
| 3 | 3 | 5 | 1 | 2 ms |
| 4 (lowest) | 7 | 15 | 1 | 2 or 4 ms |

Case 2: The priority class is related to the CCA starting point, the maximum contention window, the minimum contention window, the length of n, the MCOT_U and the number of the LBT symbols at the LBT Cat4.

Several typical examples are given below, as shown in Tables 23 to 25. The CCA starting point is fixed and unchanged. The maximum contention window, the minimum contention window, the length of n, the MCOT_U and the number of LBT symbols may be changed.

Table 23

| Class | CCA starting point | CWmin | CWmax | n | MCOT_U | The number of LBT symbols |
|---|---|---|---|---|---|---|
| 1 (highest) | Starting boundary or preset position in the CCA detection region | 0 | 1 | 0 | 0.5 ms or 1 ms | One symbol |
| 2 (second highest) | Starting boundary or preset position in the CCA detection region | 1 | 2 | 0 | 1 ms | One or two symbols |
| 3 | Starting boundary or preset position in the CCA detection region | 2 | 3 | 1 | 2 ms | One or two symbols |
| 4 (lowest) | Starting boundary or preset position in the CCA detection region | 3 | 7 | 1 | 2 or 4 ms | One or two symbols |

Table 24

| Class | CCA starting point | CWmin | CWmax | n | MCOT_U | The number of LBT symbols |
|---|---|---|---|---|---|---|
| 1 (highest) | Starting boundary or preset position in the CCA detection region | 0 | 1 | 0 | 0.5 ms or 1 ms | One symbol |
| 2 (second highest) | Starting boundary or preset position in the CCA detection region | 1 | 2 | 0 | 1 ms | One or two symbols |
| 3 | Starting boundary or preset position in the CCA detection region | 3 | 5 | 1 | 2 ms | One or two symbols |
| 4 (lowest) | Starting boundary or preset position in the CCA detection region | 7 | 15 | 1 | 2 or 4 ms | One, two or three symbols |

Table 25

| Class | CCA starting point | CWmin | CWmax | n | MCOT_U | The number of LBT symbols |
|---|---|---|---|---|---|---|
| 1 (highest) | Starting boundary or preset position in the CCA detection region | 0 | 1 | 0 | 0.5 ms or 1 ms | One symbol |

(continued)

| Class | CCA starting point | CWmin | CWmax | n | MCOT_U | The number of LBT symbols |
|---|---|---|---|---|---|---|
| 2 (second highest) | Starting boundary or preset position in the CCA detection region | 2 | 5 | 0 | 1 ms | One or two symbols |
| 3 | Starting boundary or preset position in the CCA detection region | 7 | 15 | 1 | 2 ms | One or two symbols |
| 4 (lowest) | Starting boundary or preset position in the CCA detection region | 15 | 31 | 1 | 2 or 4 ms | One, two or three symbols |

The column of CCA starting point may also be deleted from the above table. That is, the CCA starting point may not be limited.

Table 26

| Class | CWmin | CWmax | n | MCOT_U | The number of LBT symbols |
|---|---|---|---|---|---|
| 1 (highest) | 0 | 1 | 0 | 0.5 ms or 1 ms | One symbol |
| 2 (second highest) | 1 | 3 | 0 | 1 ms | One or two symbols |
| 3 | 5 | 7 | 1 | 2 ms | One or two symbols |
| 4 (lowest) | 7 or 15 | 15 or 31 | 1 | 2 or 4 ms | One or two symbols |

Case 3: The priority class is related to the CCA starting point, the maximum contention window, the minimum contention window, the length of n, the MCOT_U, the number of the LBT symbols and a TB size/information size at the LBT Cat4.

Several typical examples are given below, as shown in Table 27. The CCA starting point is fixed and unchanged. The maximum contention window, the minimum contention window, the length of n, the MCOT_U, the number of LBT symbols and the TB size may be changed.

Table 27

| Class | CCA starting point | CWmin | CWmax | n | MCOT_U | The number of LBT symbol s | TB size/ Inform ation size |
|---|---|---|---|---|---|---|---|
| 1 (highest) | Starting boundary or preset position in the CCA detection region | 0 | 1 | 0 | 0.5 ms or 1 ms | One symbol | First resource block |
| 2 (second highest) | Starting boundary or preset position in the CCA detection region | 1 | 2 | 0 | 1 ms | One or two symbols | Second resource block |
| 3 | Starting boundary or preset position in the CCA detection region | 2 | 3 | 1 | 2 ms | One or two symbols | Third resource block |
| 4 (lowest) | Starting boundary or preset position in the CCA detection region | 3 | 7 | 1 | 2 or 4 ms | One or two symbols | Fourth resource block |

The first resource block size is smaller than the second resource block size, or smaller than or equal to the second resource block size; the second resource block size is smaller than the third resource block size, or smaller than or equal to the third resource block size; and the third resource block size is smaller than the fourth resource block size, or smaller than or equal to the fourth resource block size. Or, these four resource block sizes are reduced in sequence. The predefined manner, high-layer configuration, agreement in advance between a base station and a UE, or physical layer specific DCI or common DCI may be used for determination.

Case 4: The priority class is related to the CCA starting point, the maximum contention window, the minimum contention window, the length of n, the MCOT_U, the number of the LBT symbols the TB size/information size, and the number of times of HARQ retransmission at the LBT Cat4. That is, this embodiment adopts a different LBT mechanism for different priorities, and different parameters involved in the mechanism from the embodiment 1. For the LBT Cat4 mechanism, the CCA duration, the idle CCA duration length and the m value in the embodiment 1 are replaced by the maximum contention window, the minimum contention window and an n value in the defer duration at the LBT Cat4. The other parameters are the same as those in the embodiment 1, such as the CCA starting point, the number of the LBT symbols, the MCOT U (the number of subframes in the uplink transmission, the number of subframes occupied by one uplink transmission, or the number of symbols) and the TB size. The defer duration includes: a fixed duration + n * slot, where a slot is 9 $\mu$s, and n is an integer greater than or equal to 0. Optionally, n is 0, 1, 2, 3 or 4.

New parameters and characteristics unique to the uplink are introduced, which is different from the different priorities of the downlink. For example, for uplink transmission, the UL grant is required to be transmitted as soon as possible, so that the parameter configuration corresponding to the highest priority is required by the CCA or LBT mechanism used when the UL grant is transmitted by the base station. Or, in order to obtain uplink channel state information, a SRS signal needs to be transmitted, so a higher priority is required to transmit the SRS signal, so the CCA, LBT mechanism or parameter configuration used when the SRS signal is transmitted should correspond to LBT parameters of the higher priority.

The LBT parameters and related parameters corresponding to different priorities may be determined by using: a predefined manner, high-layer configuration, an agreement in advance between the base station and the UE, or the physical layer specific DCI or common DCI.

It is assumed that the LBT mechanism adopted by the uplink or downlink is the LBT Cat4, and the priority relationship between signals or channels is: UL grant > SRS > SRS+PUSCH > PRACH. According to the above priority relationship, the corresponding and related LBT parameters are as listed in Table 28.

Table 28

| Class | Priority | CWmin | CWmax | n | MCOT_U | CW size |
|---|---|---|---|---|---|---|
| 1 (highest) | UL grant/Voice | 0 | 1 | 0 | 0.5 ms | {0,1} |
| 2 (second highest) | SRS/Video | 1 | 2 | 0 | 1 ms | {1,2} |
| 3 | SRS+PU SCH/Best effort | 2 | 3 | 1 | 2 ms | {2,3} |
| 4 (lowest) | PRACH/Background | 3 | 7 | 1 | 2 or 4 ms | {3, 4, 5, 6, 7} |

The priority classes in this embodiment may respectively correspond to the UL grant, SRS, PRACH, PUCCH, and PUSCH, and according to requirements, these channels or signals may be at the same priority class or at different priority classes. The four service types, i.e., voice, video, best effort and background, may also be identified sequentially. In addition, related LBT parameters corresponding to different priority classes may be deleted according to requirements. That is, the priority class may be related to at least one of: the CCA starting point, the maximum contention window, the minimum contention window, n, the MCOT_U, the number of the LBT symbols, the TB size, and the number of times of HARQ retransmission. In addition, as the priority deceases, the CCA starting point corresponding to the previous priority is earlier than the CCA starting point corresponding to the latter priority. Or, the CCA starting point is not limited or is fixed.

Only typical examples are given in this embodiment. In addition, as the priority class decreases, a combination of parameters like the CCA starting point, the maximum contention window, the minimum contention window, n, the MCOT_U, the number of the LBT symbols, the TB size and the number of times of HARQ retransmission which may be increased or decreased is also within the scope of the present invention.

Optional embodiment 3

In this embodiment, when a hybrid mechanism of the LBT Cat2 and the LBT Cat4 is adopted for an uplink channel access on an unlicensed carrier, a correspondence relationship between different LBT mechanisms or specific parameter configuration under each LBT mechanism and different service types or signal types is established.

In the hybrid mechanism of the LBT Cat2 and the LBT Cat4 described in the embodiment 3, cases in the embodiment 1 and the embodiment 2 may be simply combined to determine that at least one of the LBT Cat2 or the LBT Cat4 is adopted for different priorities. An example is given below.

It is assumed that the priority relationship between signals or channels is: UL grant > SRS > SRS+PMSCH > PRACH. The relationship between different priorities and LBT mechanisms or LBT parameters is defined in advance as listed in Table 29.

Table 29

| Class | Mechanism | CCA starting point | idle CCA duration | m | CW min | CW max | n | MCOT_U | The number of LBT symbols |
|---|---|---|---|---|---|---|---|---|---|
| 1 (highest) | LBT Cat2 | First preset value | 16 μs | 1 | / | / | / | 0.5 ms or 1 ms | One symbol |
| 2 (second highest) | | Second preset value | 16 μs | 2 | / | / | / | 1 ms | One or two symbols |
| 3 | LBT Cat4 | Third preset value | / | / | 1 | 3 | 0 | 2 ms or 4 ms | One or two symbols |
| 4 (lowest) | | Fourth preset value | / | / | 5 or 7 | 7 or 15 | 1 | 2 ms or 4 ms | One or two symbols |

The first preset value, the second preset value, the third preset value, and the fourth preset value in Table 29 may be the same value, or may be sequentially increased values. The LBT Cat2 and LBT Cat4 respectively indicate the LBT Category 2 and LBT Category 4. That is, the starting point at which the latter performs a CCA is later than the starting point at which the former performs a CCA. When the CCA starting points corresponding to different priority classes are the same, the CCA starting point may be a symbol boundary, a subframe boundary, a starting boundary at which the CCA detection is performed in a region, or a certain starting boundary of one of equally-spaced small segments in the CCA detection region. When the CCA starting points corresponding to different priority classes are different, the CCA starting point of the previous priority is earlier than the CCA starting point of the latter priority as the priority class decreases. The different CCA starting points corresponding to different priorities may be the starting positions of different equally-spaced small segments in the CCA detection region, or random or arbitrary positions of different equally-spaced small segments in the CCA detection region.

As the different priorities decrease, the CCA starting point may be unchanged, the CCA starting point of the previous priority may be earlier than the CCA starting point of the latter priority, the CCA starting point may not be limited, or the CCA starting point may be fixed.

It can be seen that among the priority of different signals or channels, if the UL grant has the highest priority, the LBT Cat2 of the LBT mechanism should be used when the UL grant is transmitted, the idle CCA duration is 16 μs, and the sense CCA duration is 9 μs. That is to say, when the base station detects that the continuous channel idle time is at least 25 μs when transmitting the UL grant, the use of the unlicensed carrier is considered to be obtained and then the UL grant is directly transmitted. The CCA starting point used when the UL grant is transmitted may be not limited, or may be limited to a fixed time point, a symbol boundary, a subframe boundary or a slot boundary.

The priority classes in this embodiment may respectively correspond to the UL grant, SRS, PRACH, PUCCH, and PUSCH, and according to requirements, these channels or signals may be at the same priority class or at different priority classes. The four service types, i.e., voice, video, best effort and background, may also be identified sequentially. In addition, related LBT parameters corresponding to different priority classes may be deleted according to requirements. That is, the priority class may be related to at least one of: the CCA starting point, the CCA duration length, the MCOT_U, the number of the LBT symbols, the TB size, and the number of times of HARQ retransmission.

Only typical examples are given in this embodiment. In addition, as the priority class decreases, a combination of parameters like the CCA starting point, the CCA duration, the idle CCA duration, m, the maximum contention window, the minimum contention window, n, the MCOT_U, the number of the LBT symbols, the TB size and the number of times of HARQ retransmission which may be increased or decreased is also within the scope of the present invention.

An embodiment of the present invention further provides a computer storage medium, which is configured to store computer-executable instructions for executing the channel access methods described in the embodiments of the present invention.

Optional embodiment 4

In this embodiment, a reuse rule is mainly provided when multiple different priorities are included in an uplink PUSCH transmission.

Rule 1: When multiple different priorities are included in the uplink PUSCH transmission, channel access and transmission occupation are performed according to LBT parameters corresponding to the lowest priority.

For example, when the priority class of a SRS is 1 (highest) and the priority class of the PUSCH transmission is 3, if the SRS and the PUSCH are transmitted at the same time, the channel access and transmission are performed according to the LBT parameters or transmission duration corresponding to the priority class of the PUSCH. For details, see Table 30.

Table 30

| Class | Priority | Mechanism | CCA starting point | idle CCA duration | m | CW min | CW max | n | MCOT_U | The number of LBT symbols |
|---|---|---|---|---|---|---|---|---|---|---|
| 1 (highest) | SR S | LBT Cat2 | Preset value (the CCA starting point may be fixed or variable, i.e. random) | 16 μs | 1 | / | / | / | 0.5 ms | 2 |
| 2 (second highest) | PR AC H | | Preset value (the CCA starting point may be fixed or variable, i.e. random) | 16 μs | 2 | / | / | / | 1 ms | 1 |
| 3 | PU SC H | LBT Cat4 | Symbol boundary | / | / | 1 | 2 | 0 | 1.5 ms | 1 |
| 4 (lowest) | PU CC H | | Preset value (the CCA starting point may be fixed or variable, i.e. random) | / | / | 2 | 3 | 1 | 2 ms | 1 |

It can be seen from Table 29 that when the SRS and the PUSCH are transmitted at the same time, the CCA starting point needs to start at the symbol boundary of the configured LBT symbol position, the uplink transmission duration takes 1.5 ms, the maximum contention window is 2, the minimum contention window is 1, the defer duration is 16 μs, and the number of symbols occupied by the LBT is 1.

In Table 10, the parameter items corresponding to each class may be at least one item in each column, or may be items in each column combined with each other.

In addition, the priority classes in Table 29 may also be service types: voice, video, best effort, and background. And correspondingly, only one LBT mechanism is provided in the LBT mechanism column, such as the LBT Cat2 or LBT Cat4. The CCA starting point in the table may be a symbol boundary, a subframe boundary, a starting boundary of the CCA detection region, a starting boundary of one of equally-spaced small segments in the CCA detection region, or a random or arbitrary position in the CCA detection region. The CCA detection region may be notified to the UE by the base station through the physical layer specific DCI signaling or the common DCI signaling, may be agreed on in advance between the base station and the UE, or may be determined through the high-layer configuration.

Rule 2: When multiple different priorities are included in the uplink PUSCH transmission, the channel access and transmission occupation are performed according to LBT parameters corresponding to the highest priority. The principle is the same as the principle in rule 1 and is not illustrated here.

Rule 3: When multiple different priorities are included in the uplink PUSCH transmission, the channel access and transmission occupation are performed according to LBT parameters corresponding to the preset priority. The principle is the same as the principle in rule 1 and is not illustrated here. The preset priority may be determined by one of: agreement in advance between the base station and the UE; configuration through high-layer RRC signaling; notification to the UE through the physical layer specific DCI; and notification to the UE through the physical layer common DCI.

Rule 4: Among the multiple priority classes, the UE selects a LBT priority class or LBT mechanism, and determines the uplink transmission duration, the number of symbols to be used for LBT, the number of times of HARQ retransmission, and the TB size. For example, three priority classes, i.e. video, best effort, and background are included in the PUSCH transmission of the UE. The UE selects one of the three priority classes as the final used or executed priority class, and therefore determines the uplink transmission duration, the LBT parameter value at the time of contention access, the number of LBT symbols, the number of times of HARQ retransmission, and the TB size according to the selected priority class.

Rule 5: The base station determines a minimum transmission duration, a maximum transmission duration, a preset transmission duration and the number of LTB symbols to be used according to the priority of the uplink transmission service and transmission signal/channel. The UE may perform the channel access according to the LBT parameter value of the contention access corresponding to the transmission duration indicated by the base station, or according to the LBT parameter or the parameter value selected by the UE itself.

Rule 6: A priority class is selected according to an adaptive selection rule. For example, a LBT mechanism or parameter corresponding to the lowest priority is assumed to perform channel access first and the transmission duration is 2 ms, while the traffic capacity of the lowest priority is small and the transmission is completed within less than 1 ms, at which point a service or a signal/signal type, of other priorities, being transmitted and a service preparing to be transmitted in the current subframe may perform channel access and transmission within corresponding transmission duration according to a LBT mechanism or parameter of a higher, the highest, still the lowest priority, or a predetermined priority level.

In the above rules, when a transmission device contends for and obtains an unlicensed carrier according to the LBT parameter corresponding to a priority, if transmission duration of the transmission device is less than transmission duration corresponding to the priority, a UE may transmit an occupation signal, or notify a base station or other UEs in the same cell or same operator to use the remaining transmission duration corresponding to the priority. If the transmission duration or traffic capacity of the transmission device is greater than transmission duration corresponding to a priority, the transmission device immediately contends to the unlicensed carrier according to a LBT mechanism or LBT parameters corresponding to the highest priority when the maximum duration corresponding to the priority ends, or performs the most simplified LBT (e.g., at LBT Cat2 and with CCA duration of 16 $\mu$s or 25 $\mu$s, at LBT Cat2 of the DRS, or at enhanced LBT Cat2, the CCA detection starting point of which is not fixed, or is randomly selected). Optionally, the transmission device immediately performs the LBT mechanism when the corresponding maximum transmission duration ends, or performs the LBT mechanism immediately after an interval of gap. Optionally, the duration of the gap is no less than a preset value, where the preset value may be 9 $\mu$s or 16 $\mu$s.

The uplink transmission duration in the present invention may be construed that: the base station occupation duration is not considered, and only the UE transmission duration is considered; or the transmission duration of the UE depends on the downlink transmission duration based on the base station occupation duration. Assuming that the base station occupation period is 8 ms and the downlink transmission duration is 2 ms, the maximum transmission duration available for the uplink is 6 ms.

Optional embodiment 5

In this embodiment, for a single-subframe scheduling or multi-subframe scheduling scenario on an unlicensed carrier, indication signaling or notification signaling is provided, which is used to notify a UE which symbol is vacant in the subframe and the number of vacant symbols for facilitating the contending UE to perform a CCA for channel access. The advantage of this mode is that power consumption is reduced when the UE performs the CCA.

A position and the number of symbols for the UE to perform the CCA may be configured in the manners described below.

Manner 1: The number of symbols and the CCA position specific for the CCA in each uplink subframe are set to vacant.

For example, a UE that is contending or preparing to contend performs the CCA according to an agreement in advance between a base station and the UE, or by using the last symbol in the uplink subframe or the first symbol in the uplink subframe. In this manner, the uplink resource is wasted to some extent, and in the multi-subframe scheduling case, an occupied channel of the continuously scheduled UE is robbed by other nodes at the vacant resource, and the transmission is interrupted. During transmission, in order to prevent a node from losing the use right of the channel, the UE may perform a one-shot LBT with a CCA duration of 25 $\mu$s at the vacant symbol position, or transmits a reserved signal or an occupation signal only on a specific resource element (RE). The reserved signal or the occupation signal may be a SRS.

Manner 2: The base station dynamically indicates at least one of an uplink subframe, a vacant symbol in the subframe, and the number of vacant symbols for the contending UE to perform the CCA.

At least one of the uplink subframe position, a position of the vacant symbol in the subframe, and the number of vacant symbols is indicated by the methods described below.

Method 1: A specific position in the uplink subframe is configured through high-layer RRC. That is, when only one UE is scheduled in high-layer-RRC-configured and contiguously scheduled sub frames, no vacant symbols exist between the contiguously scheduled sub frames for other UEs to perform the CCA.

Alternatively, when multiple UEs are scheduled in a specific subframe of contiguously scheduled subframes configured through the high-layer RRC, one or more symbols at the end of a subframe before the first subframe of the contiguously scheduled subframes that schedules multiple UEs are configured to be vacant; or, one or more symbols at the beginning of the subframe in which multiple UEs are scheduled are vacant.

Method 2: The base station uses physical layer specific DCI signaling, common DCI signaling, or newly designed DCI to notify the UE of the number of symbols and positions that are vacant. The physical layer specific DCI may indicate which symbol positions in the scheduling subframe are not used for the UE to transmit the PUSCH. For example, the DCI may indicate one scheduled subframe and positions or the number of vacant symbols, or implicitly indicates that the last symbol position or the first symbol position in the scheduling subframe is vacant. For example, one DCI may indicate positions of multiple scheduling subframes, which scheduling subframe has vacant symbols and the number of the vacant symbols, implicitly indicate that the last symbol position or the first symbol position in an odd scheduling subframe is vacant, or indicate that the first symbol position in a subframe in which the multiple UEs are scheduled or the last symbol of a subframe before the subframe in which the multiple UEs are scheduled is vacant. Or when a UE among the multiple scheduling UEs fails to perform LBT, a UE that successfully performs the LBT needs to provide a vacant symbol for the contending UE to perform a CCA, and the vacant symbol is at the end of the first subframe or at the beginning of the second subframe of contiguously transmitted subframes.

For example, for the physical layer specific DCI, an IE item or field that is not used in the LAA in format 0 or 4, such as Frequency hopping flag (1 bit) and Carrier indicator (3 bit), may be used, and a number of bits of the unused field may be assigned new meanings. The new meanings are as follows: 1. The CCA position is not configured; 2. A specific position of each subframe is reserved for the CCA; 3. According to the number of scheduled resources, the last symbol in the contiguous scheduling subframes is reserved for the CCA. The position of the CCA may be one or more symbols at the end of a subframe before a single or multiple contiguous scheduling subframes, one or more symbols at the end of the single or multiple contiguous scheduling subframes, or one or more symbols before the single or multiple contiguous scheduling subframes. The specific position may be defined in advance or be predetermined in advance by the base station and the UE.

For common DCI, the LAA subframe branch may be configured in format 1C. For example, the x bits are used to indicate the LAA subframe configuration and y bits are reserved. Part of the y bits may be used to indicate the uplink subframe index, the symbol position and the number of symbols.

For example, m bits of the y bits are used to indicat the uplink subframe index, where the subframe index of vacant symbols may be notified to the UE by occupying s bits, or not only the subframe index but also the symbol position and the number of symbols that are vacant are notified. Alternatively, only one of the following options after 2) is notified:

symbols in a scheduling subframe are not vacant;

no vacant symbols exist between multiple contiguously scheduled subframes;

one symbol at the end of the scheduling sub frame is vacant;

two symbols at the end of the scheduling subframe are vacant;

one symbol at the end of each of the contiguously scheduled subframes is vacant;

two symbols at the end of each of the contiguously scheduled subframes are vacant;

one symbol at the beginning of the scheduling sub frame is vacant;

two symbols at the beginning of the scheduling subframe are vacant;

one symbol at the beginning of each of the contiguously scheduled subframes is vacant;

two symbols at the beginning of each of the contiguously scheduled subframes are vacant;

one symbol at the end of a subframe of the contiguously scheduled subframes whose subframe index is an even is vacant;

two symbols at the end of a subframe of the contiguously scheduled subframes whose subframe index is an even are vacant;

one symbol at the beginning of a subframe of the contiguously scheduled subframes whose subframe index is an even is vacant;

two symbols at the beginning of a subframe of the contiguously scheduled subframes whose subframe index is an even are vacant;

one symbol at the end of a subframe of the contiguously scheduled subframes whose subframe index is an odd is vacant;

two symbols at the end of a subframe of the contiguously scheduled subframes whose subframe index is an odd are vacant;

one symbol at the beginning of a subframe of the contiguously scheduled subframes whose subframe index is an odd is vacant;

two symbols at the beginning of a subframe of the contiguously scheduled subframes whose subframe index is an odd are vacant;

one symbol at the end of a specific subframe of the contiguously scheduled subframes is vacant;

two symbols at the end of a specific subframe of the contiguously scheduled subframes are vacant;

one symbol at the beginning of a specific subframe of the contiguously scheduled subframes is vacant;

two symbols at the beginning of a specific subframe of the contiguously scheduled subframes are vacant;

the scheduled uplink subframe position is determined according to an n+k timing relationship, and one or two symbols at the end of each subframe or one subframe are vacant; and

the scheduled uplink subframe position is determined according to an n+k timing relationship, and one or two symbols at the beginning of each subframe or one subframe are vacant.

k is a value greater than or equal to 4. n is a subframe for transmitting DCI. In addition, in the DCI, not only an IE field of the subframe index of the vacant symbol is added, but also an IE field indicating the number of vacant symbols, an IE field of the position of the vacant symbol in the subframe, and the LBT mechanism may be added. And once the LBT fails to perform at a vacant symbol position, one or two symbols at the end of or one or two symbols at the beginning of a subframe in which the LBT fails to perform at the vacant symbol position or of a next subframe may be added.

If the y bits are not used up, the remaining bits are reserved.

For common DCI, an if-else branch is added to the format 1C used for indicating the uplink subframe index, the symbol position, and the number of symbols. That is, part or all of the total x+y bits in the format 1C are used to indicate the uplink subframe index, the symbol position, the number of symbols, the LBT mechanism, a SRS symbol position, the number of CCA symbols used for the SRS, and the CCA for and the scheduling information of the PUSCH. The above IE fields may indicate meanings thereof by independently and respectively occupying bits, or may be combined with each other to indicate a specific meaning by occupying specific bits.

For example, u bits are used for resource block indication; and the scheduling resource block information may be configured as an option. When scheduling information exists, the option may be configured; and when the PUSCH is not scheduled, corresponding IE items such as the resource indication may not be configured. The related IE items used for indicating resource allocation and scheduling in the existing DCI may be directly copied.

o bits may be used to indicate a modulation and coding scheme and may also be a matchable item. The principle is the same as what is described above.

3 bits are used to indicate a case in which a symbol position is vacant for performing the CCA, as described below.

"000" indicates that no vacant symbols exist in a subframe.

"001" indicates that one symbol at the end of the subframe is vacant, where the one symbol may be at the end of a subframe before a currently scheduling subframe or at the end of the currently scheduling subframe. The subframes described in the following options may be construed as the above meanings.

"001" indicates that two symbols at the end of the subframe are vacant.

"010" indicates that one symbol at the beginning of the subframe is vacant.

"011" indicates that two symbols at the beginning of the subframe are vacant.

"100" indicates that one symbol at the end of a subframe of the contiguously scheduled subframes whose subframe index is an even is vacant.

"101" indicates that one symbol at the beginning of a subframe of the contiguously scheduled subframes whose subframe index is an even is vacant.

"110" indicates that one symbol at the end of a subframe of the contiguously scheduled subframes whose subframe index is an odd is vacant.

"101" indicates that one symbol at the beginning of a subframe of the contiguously scheduled subframes whose subframe index is an odd is vacant.

"111" indicates that one symbol at the end of a subframe before the first subframe of the contiguously scheduled subframes that has multiple scheduled UEs is vacant, or one symbol at the beginning of the first subframe in which multiple UEs are scheduled is vacant.

q bits are used to indicate the LBT mechanism. The LBT mechanism includes one-shot LBT. The CCA duration is at least 25 μ s, such as 25 μ s or 34 μ s. The LBT Cat4 is used. The maximum contention window may be selected from a set of {1, 2, 3, 4, 5, 6, 7, 8, 9, 10, 11, 12, 15, 31 ...}. r bits are used to indicate the SRS symbol position. r bits are used to indicate whether the SRS symbol is the last symbol in the subframe specified in the existing protocol, or whether the SRS symbol position is modified to be, in the subframe, the first symbol, the second symbol, the penultimate symbol, a demodulation reference signal (DMRS) symbol position, the last symbol in the first half of the slot, or the first symbol in the second half of the slot.

In addition, the bits in the DCI may be used to formulate corresponding IEs or fields according to our requirements. For example, the bits in the DCI may be used to indicate: scheduling subframes, the number of scheduling subframes, time domain pattern of the scheduling subframes, cluster size of the scheduling subframes, the number of clusters of the scheduling subframes, cluster intervals, the CCA position, the number of CCA symbols, and the scheduling subframe position and the CCA position that are corresponding to various combinations of CCA intervals and CCA starting points. The remaining bits may be used to indicate content such as resource allocation, SRS request fields, Transmit Power Control (TPC) for scheduling the PUSCH, and the like. If any remaining bits exist, they are reserved.

As shown in FIG. 3, a UE1 is designated to be scheduled for four continuous sub frames according to the common DCI. The CCA time domain pattern of the UE1 is one symbol at the end of a sub frame before the scheduling sub frame. One symbol at the end of a sub frame after an interval of 3 subframes, that is, at the end of the third scheduling subframe is to be vacant or silent for a UE2 scheduled in the next subframe to perform the CCA. One symbol at the end of the last scheduling subframe is also vacant for a UE3 scheduled in the next subframe to perform the CCA. If the CCA execution position is not the one symbol at the end of the subframe before the scheduling subframe, the manner also applies to cases in which other CCA positions are provided. Method 3: The high-layer and the physical layer jointly indicate the number and positions of vacant symbols for the UE.

In method 3, in fact, an uplink CCA time domain pattern is of the high-layer configuration for triggering an enabled time domain position corresponding to the CCA pattern through the physical layer specific DCI, common DCI or new DCI. For the enabled CCA symbol position, the CCA symbol position of the subframe needs to be vacant for the contending UE to perform the CCA. The CCA time domain pattern configured by the high-layer may be spaced apart by each subframe. The CCA time domain is in units of symbols.

Similarly, it is assumed that the last symbol in each uplink subframe is configured as the CCA position by the high-layer, and whether the last symbol corresponding to the PUSCH in each subframe is to be destroyed is determined by dynamic indication from the physical layer specific DCI or the common DCI. The method and principle are the same as those in the example of FIG. 4 or in this embodiment.

FIG. 5 is a schematic diagram of a combination of multi-subframe scheduling and single-subframe scheduling according to an embodiment of the present invention.

For example, the UE1 is scheduled in contiguous subframe #n+1, subframe #n+2, subframe #n+3, and subframe #n+4. The UE2 is also scheduled in the same contiguous subframes as the UE1. At this time, the UE1 and the UE2 perform the CCA on the last symbol of a subframe before the subframe #n+1 or on the first symbol of the subframe #n+1, the LBT Cat4 is adopted, and the maximum contention window is not larger than 7. If the UE1 performs the LBT successfully and the UE2 fails to perform the LBT, when being transmitted in the subframe #n+1, the UE1 vacates the last symbol in the subframe #n+1 or the first symbol in the subframe #n+2 for the UE2 to perform the CCA. At this time, the LBT mechanism used by the UE2 may be the original LBT Cat4 and the maximum contention window is not greater than 7. A one-shot LBT with a CCA duration of 25 μs may be used. An LBT mechanism similar to a DRS may be used. The LBT Cat4 may also be used and the maximum contention window is not more than 3. That is, the original LBT mechanism may be used, a smaller contention window than the contention window in the original LBT mechanism may be used, or an LBT mechanism that accesses the channel more quickly than the original LBT mechanism may be used. At this time, if the UE1 does not vacate the above-mentioned corresponding symbols, the UE2 is blocked from performing the CCA and performing transmission. Therefore, the UE1 may perform a one-shot LBT with a CCA duration of 25 μs at the above-mentioned corresponding vacant symbol position, or only a reserved signal or an occupation signal is transmitted on a specific RE. The reserved signal or the occupation signal may be a SRS.

For example, UE1 is scheduled in contiguous subframe #n+1, subframe #n+2, subframe #n+3, and subframe #n+4. The UE2 is scheduled in contiguous subframe #n+1 and subframe #n+2. A UE3 is scheduled in contiguous subframe #n+3 and subframe #n+4. At this time, when both the UE1 and the UE2 perform the LBT successfully within one or more symbols at the end of a subframe before the subframe #n+1, or within one or more symbols at the beginning of the subframe #n+1, where the LBT Cat4 is used and the maximum contention window is not greater than 7, no vacant symbols exist between contiguous transmitted subframes for the UE1 and the UE2. Since the UE2 is transmitted in two contiguous subframes, no transmission is performed in the subframe #n+3 and the subframe #n+4. At this time, if the UE1 is normally transmitted in the remaining subframe #n+3 and subframe #n+4 and does not vacate symbols for other contending UEs to perform the CCA, at this time, channel access and uplink transmission of the UE3 are blocked. Therefore, the UE1 needs to vacate one symbol at the end of a subframe before the subframe #n+3 or the first symbol of the subframe #n+3 for the UE3 to perform the CCA. In order to prevent the UE1 from losing the channel at the vacant symbol position, the UE1 may perform a one-shot LBT with a CCA duration of 25 μs at the above-mentioned corresponding vacant symbol position, or transmit a reserved signal or an occupation signal only on a specific RE. At this time, the UE3 may use the LBT Cat4, and the maximum contention window is not greater than 7.

In the multi-subframe scheduling scenario exemplified in the above embodiment, the number of and positions of vacant symbols may be notified to the UE according to the method 1 and method 2 described in this embodiment. If not in collision, the above methods may be used in combination.

Optional embodiment 6

This embodiment mainly provides a process for identifying or distinguishing between UL grant missing, a CCA failure, and an uplink data transmission failure.

In step 1, a base station transmits an UL grant to a UE through a downlink control channel.

In step 2, after the UE receives the UL grant, the UE performs CCA detection before a position determined by a specific timing relationship.

The specific timing relationship is n+k, where n denotes a subframe for transmitting DCI by the base station, and k is an integer greater than or equal to 4. The UE determines a scheduling subframe according to the n+k timing relationship. The UE may perform the uplink CCA detection after receiving the UL grant transmitted by the base station or before the scheduling subframe.

Optionally, after receiving the UL grant transmitted by the base station, the UE may transmit indication information at a first specific position on an unlicensed carrier for notifying that the UE has received the UL grant information transmitted by the base station.

Alternatively, the UE may transmit indication information at a second specific position on the unlicensed carrier for notifying that the UE has received the UL grant information transmitted by the base station. The precondition for transmitting indication information on the unauthorized carrier is that the CCA must be performed to contend for the use right of the unlicensed carrier. The CCA may be performed before or after the UL grant is received.

The first specific position may be a position agreed on in advance between the base station and the UE, or a position at which the base station notifies the UE through specific DCI or common DCI. The position may be a subframe position, an indication symbol position in a subframe or an indication symbol position.

The second specific position may be transmitted by a specific symbol at the first subframe position after the UL grant is received, a symbol after the downlink transmission ends and before the uplink transmission starts, the first subframe after the CCA is performed successfully, the first symbol or specific symbol in the first subframe after the LBT is performed successfully, or an Ack/Nack position in the scheduling subframe. At this time, the information transmitted by the Ack/Nack position is used for indicating whether the UL grant is received successfully. The discriminating method may also multiplex the method of the Ack/Nack. The indication information or signal may be a scheduling request (SR), Preamble, sounding reference signal (SRS), or demodulation reference signal (DMRS).

In step 3, if the UE performs the CCA successfully before a position determined by the timing relationship, the uplink data or SRS may be transmitted. At the same time, an indication signal or sequence may also be transmitted at a third specific position in the uplink PUSCH transmission. Multiple contiguous subframes are scheduled for the UE, and the third specific position may be the first subframe of the multiple contiguously scheduled subframes, the first or second even subframe, the first or second odd subframe, or one subframe position indicated by the base station. And if the UE uses single-subframe scheduling, the third specific position is the scheduling subframe position. The symbol position transmitted at the third specific position by the indication signal or sequence may be agreed on in advance between the base station and the UE, notified to the UE through the specific DCI, common DCI or new DCI, or configured by the high-layer. Or implicitly, as long as the LBT is performed successfully, the symbol position transmitted at the third specific position by the indication signal or sequence may correspond to, in the scheduling subframe, the first symbol, the last symbol, the third and fifth symbol in the first half slot or the third and fifth symbol in the second half slot (ACK/NACK symbol position), or the fourth symbol position in the first half slot or the fourth symbol position in the second half slot position (DMRS symbol position). That is, the indication signal or sequence used for indicating whether the CCA is performed successfully or not may be transmitted at, in the scheduling subframe, the first symbol, the last symbol, the third and fifth symbol in the first half slot or the third and fifth symbol in the second half slot (ACK/NACK symbol position), or the fourth symbol position in the first half slot or the fourth symbol position in the second half slot position (DMRS symbol position). If the CCA is performed unsuccessfully, the indication sequence or signal may be transmitted in the same subframe on the licensed carrier as the corresponding scheduling resource position on the unlicensed carrier. Optionally, if the CCA is performed successfully, the indication sequence or signal may be transmitted at a symbol position of a scheduling subframe on a licensed carrier or a corresponding symbol position of a corresponding scheduling subframe on an unlicensed carrier. The above is used to indicate that the UE has performed the CCA successfully. This information may also distinguish between the CCA failure and the data transmission failure.

The indication information or signal may be SR, Preamble, SRS, or DMRS.

And when the UE performs the CCA unsuccessfully before the position determined by the timing relationship, the indicated signal or sequence may be transmitted at a specific position on the licensed carrier. The base station and the UE predetermine in advance on a position at which the indication signal or sequence is transmitted on the licensed carrier or the unlicensed carrier.

In step 4, after receiving the indication information or data transmitted by the UE or a signal in a specific region, the base station does not first perform data decoding, but directly detects whether the energy in the channel on the licensed carrier or the unlicensed carrier satisfies specific threshold requirements, so as to determine whether to decode data or the indication message; or, the base station does not first decode the data, but directly decodes the indication signal or sequence transmitted by a specific position to determine whether the CCA is successful, and thus decodes the received data. To some extent, this method reduces the complexity of the base station side and saves energy.

Alternatively, before decoding the received information, the base station first decodes the indication information, and if the decoded indication information indicates that the CCA fails to be performed, the base station does not need to decode the data information, and thus the power consumption and detection complexity on the base station side is reduced to some extent. If the CCA is indicated to be successfully performed, the base station performs decoding of the received data.

The indication information or signal in respective time domain involved in the above-mentioned steps may be mapped to the frequency domain of the corresponding symbol in sequent, in reverse order, or in a random order, so that the decoding is performed correspondingly in sequent, in the reverse order or in the random order to obtain the meaning of the respective indications at respective positions. For example, in step 2, if the corresponding position receives the indication information or signal and the decoding is successful, it may be obtained that the UE have successfully received the UL grant. In step 3, if the indication information or signal is received at a corresponding position and the decoding is successful, the UE may be considered to perform the CCA successfully or unsuccessfully. Execution indications are transmitted at different predetermined positions to distinguish whether the UL grant is missed, whether the CCA is successful, and whether the data transmission is successful. The different predetermined positions are shared by the base station and the UE, or are notified by the base station to the UE.

An embodiment of the present invention further provides a channel access apparatus for implementing the above-mentioned embodiments and optional implementation modes, and what has been described will not be repeated. As used below, a term "module" may be software, hardware or a combination thereof capable of implementing preset functions. The apparatus in the embodiments described below is preferably implemented by software, but implementation by hardware or by a combination of software and hardware is also possible and conceived.

Embodiment 2

FIG. 6 is a structural block diagram of a channel access apparatus according to an embodiment of the present invention. As shown in FIG. 6, the apparatus includes a determination module 61 and a processing module 62. The apparatus is described below.

The determination module 61 is configured to determine a priority class in use of an unlicensed carrier. The processing module 62 is connected to the determination module 61 and configured to perform channel access of the unlicensed carrier according to a CCA parameter. The CCA parameter matches the determined priority class and is used for performing a CCA detection before access to the unlicensed carrier.

FIG. 7 is an optional structural block diagram of a determination module 61 in a channel access apparatus according to an embodiment of the present invention. As shown in FIG. 7, the determination module 61 includes a first determination unit 71 or a second determination unit 72. The determination module 61 is described below.

The first determination unit 71 is configured to, if one priority class in use of the unlicensed carrier is provided, determine that this priority class is the priority class. The second determination unit 72 is configured to, if at least two priority classes in use of the unlicensed carrier are provided, select according to a predetermined principle one priority class from the at least two priority classes as the priority class.

Optionally, the determination module 61 is further configured to determine the priority class in use of the unlicensed carrier in at least one of the following manners: in a predefined manner; a negotiation between a base station and a UE; reception of RRC signaling; through physical layer specific DCI signaling; and through physical layer common DCI signaling.

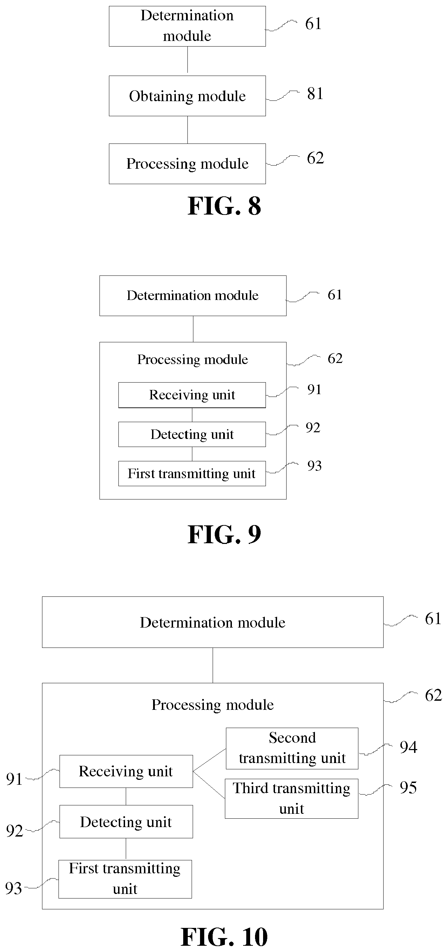

FIG. 8 is an optional structural block diagram of a channel access apparatus according to an embodiment of the present invention. As shown in FIG. 8, the apparatus further includes an obtaining module 81 in addition to the structures shown in FIG. 6. The obtaining module 81 is described below.

The obtaining module 81 is connected to the above-mentioned determination module 61 and processing module 62 and is configured to, before the channel access of the unlicensed carrier is performed according to the CCA parameter matching the determined priority class and used for performing the CCA detection before the unlicensed carrier is used, obtain at least one of a subframe position and a reserved symbol index for performing the CCA in one of the following manners: a predefined manner; an agreement in advance between a base station and a UE on at least one of the subframe position and the reserved symbol index; configuration of a predetermined position in a transmission subframe with high-layer RRC signaling; configuration of an end position of downlink transmission with the high-layer RRC signaling; configuration of a CCA time domain pattern with the high-layer RRC signaling; configuration with physical layer specific DCI signaling, common DCI signaling or newly designed DCI signaling; and joint configuration with the high-layer RRC signaling and the physical layer specific DCI signaling, common DCI signaling or newly designed DCI signaling.

Optionally, the obtaining module 81 is specifically configured to obtain at least one of the subframe position and the reserved symbol index through the common DCI signaling or newly designed DCI signaling in one of the following manners: one or more bits of Y reserved bits in a LAA subframe configuration branch in the common DCI signaling are used to indicate at least one of the subframe position of the reserved symbol used to perform the CCA, a CCA position, a CCA vacant symbol index, an interval of the CCA and the CCA starting point, where Y is a preset number; and, one or more bits of all bits in the newly designed DCI signaling or a new branch in the common DCI signaling are used to indicate at least one of the subframe position of the reserved symbol used to perform the CCA, the CCA position, the CCA vacant symbol index, the interval of the CCA and the CCA starting point.

FIG. 9 is an optional structural block diagram 1 of a processing module 62 in a channel access apparatus according to an embodiment of the present invention. As shown in FIG. 9, the processing module 62 includes: a receiving unit 91, a detecting unit 92 and a first transmitting unit 93. The processing module 62 is described below.

The receiving unit 91 is configured to receive uplink grant information transmitted by a base station. The detecting unit 92 is connected to the receiving unit 91 and configured to perform the CCA detection before a position determined by a predetermined timing relationship. The first transmitting unit 93 is connected to the detecting unit 92 and configured to transmit uplink data or a SRS to the base station when the CCA detection succeeds.

FIG. 10 is an optional structural block diagram 2 of a processing module 62 in a channel access apparatus according to an embodiment of the present invention. As shown in FIG. 10, the processing module 62 further includes, in addition to the structure shown in FIG. 9, at least one of: a second transmitting unit 94 and a third transmitting unit 95. The processing module 62 is described below.

The second transmitting unit 94 is configured to transmit first indication information at a first predetermined position on a licensed carrier. The first indication information is used to indicate that a UE has received the uplink grant information transmitted by the base station. The third transmitting unit 95 is configured to transmit the first indication information at a second predetermined position after the contention for a use right of the unlicensed carrier through the CCA detection succeeds.

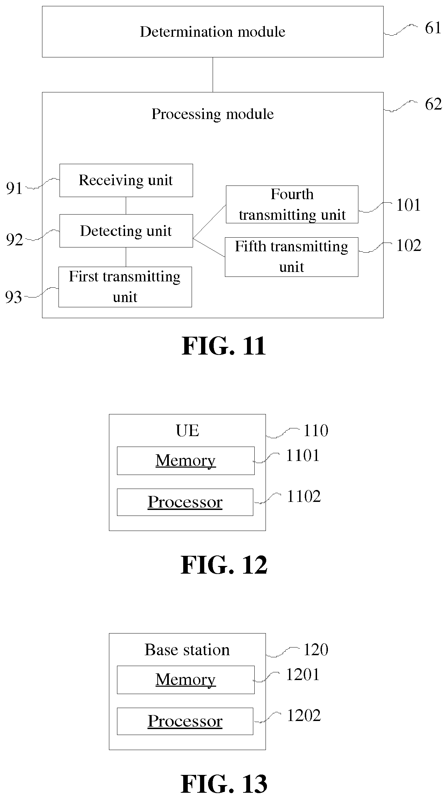

FIG. 11 is an optional structural block diagram 3 of a processing module 62 in a channel access apparatus according to an embodiment of the present invention. As shown in FIG. 11, the processing module 62 further includes, in addition to the structure shown in FIG. 9 or 10 (FIG. 9 is taken as an example), at least one of: a fourth transmitting unit 101 and a fifth transmitting unit 102. The processing module 62 is described below.

The fourth transmitting unit 101 is configured to transmit second indication information at a third predetermined position on the licensed carrier. The second indication information is used to indicate execution result information of the CCA detection performed by the UE, and the execution result information includes: success or failure in CCA detection. The fifth transmitting unit 102 is configured to transmit the second indication information at a fourth predetermined position after the contention for the use right of the unlicensed carrier with the CCA detection succeeds.

FIG. 12 is a structural block diagram of a UE according to an embodiment of the present invention. As shown in FIG. 12, a UE 110 includes a memory 1101 and a processor 1102.

The memory 1101 is configured to store executable instructions for channel access.

The processor 1102 is configured to execute the executable instructions for channel access stored in the memory 1101 to: determine a priority class in use of an unlicensed carrier; and perform channel access of the unlicensed carrier according to a CCA parameter. The CCA parameter matches the determined priority class and is used for performing a CCA detection before access to the unlicensed carrier.

In an embodiment, the processor 1102 is further configured to, if one priority class in use of the unlicensed carrier is provided, determine that this priority class is the priority class; or if at least two priority classes in use of the unlicensed carrier are provided, select according to a predetermined principle one priority class from the at least two priority classes as the priority class.

FIG. 13 is a structural block diagram of a base station according to an embodiment of the present invention. As shown in FIG. 13, a base station 120 includes a memory 1201 and a processor 1202. The memory 1201 is configured to store executable instructions for channel access.

The processor 1202 is configured to execute the executable instructions for channel access stored in the memory 1201 to: determine a priority class in use of an unlicensed carrier; and perform channel access of the unlicensed carrier according to a CCA parameter. The CCA parameter matches the determined priority class and is used for performing a CCA detection before access to the unlicensed carrier.

In an embodiment, the processor 1202 is further configured to, if one priority class in use of the unlicensed carrier is provided, determine that this priority class is the priority class; or if at least two priority classes in use of the unlicensed carrier are provided, select according to a predetermined principle one priority class from the at least two priority classes as the priority class.

It is to be noted that the various modules described above may be implemented by software or hardware. Implementation by hardware may, but not necessarily, be performed in the following manner: The various modules described above are located in a same processor or their respective processors.

An embodiment of the present invention further provides a computer storage medium. Optionally, in this embodiment, the computer storage medium may be configured to store program codes for executing the steps described in the embodiment 1.

Apparently, those skilled in the art should understand that each of the above-mentioned modules or steps of the present invention may be implemented by a general-purpose computing apparatus, the modules or steps may be concentrated on a single computing apparatus or distributed on a network formed by multiple computing apparatuses, and optionally, the modules or steps may be implemented by program codes executable by the computing apparatuses, so that modules or steps may be stored in a storage apparatus and executed by the computing apparatuses. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only optional embodiments of the present invention and are not intended to limit the present invention, and for those skilled in the art, the present invention may have various modifications and variations. Any modifications, equivalent substitutions, improvements and the like made within the spirit and principle of the present invention are within the scope of the present invention.

## INDUSTRIAL APPLICABILITY

In the embodiments of the present invention, the priority class in use of the unlicensed carrier is determined, and the channel access of the unlicensed carrier is performed according to the CCA parameter. The CCA parameter matches the determined priority class and is used for performing the CCA detection before access to the unlicensed carrier. Thus, the problem of low channel access probability on an unlicensed carrier can be effectively solved and then the success rate of channel access is improved.

**Claims**

1. A channel access method, comprising:

   determining a priority class in use of an unlicensed carrier; and
   performing channel access of the unlicensed carrier according to a clear channel assessment (CCA) parameter, wherein the CCA parameter matches the determined priority class and is used for performing a CCA detection before access to the unlicensed carrier.

2. The method of claim 1, wherein the determining a priority class in use of an unlicensed carrier comprises:

   when one priority class in use of the unlicensed carrier is provided, determining the one priority class as the priority class; or
   when at least two priority classes in use of the unlicensed carrier are provided, selecting, according to a predetermined principle, one priority class from the at least two priority classes as the priority class.

3. The method of claim 2, wherein the predetermined principle comprises at least one of:

   selecting a lower priority class from the at least two priority classes as the priority class;
   selecting a higher priority class from the at least two priority classes as the priority class;
   selecting a priority class determined by a user equipment (UE) from the at least two priority classes as the priority class;
   selecting a priority class determined by a base station from the at least two priority classes as the priority class; and
   selecting a priority class according to a predetermined adaptive selection rule from the at least two priority classes as the priority class.

4. The method of claim 1, wherein the priority class comprises at least one of:
   a priority class of a service type, a priority class of a signal type, and a priority class of a channel type.

5. The method of claim 4, wherein

   the service type comprises at least one of: voice, video, best effort and background; or
   the signal type comprises at least one of: a sounding reference signal (SRS), and a distributed resource signal (DRS); or
   the channel type comprises at least one of: an uplink grant channel, a downlink grant channel, a physical random access channel (PRACH), a physical uplink control channel (PUCCH), a physical uplink shared channel (PUSCH), a physical downlink shared channel (PDSCH), and a physical downlink control channel (PDCCH).

6. The method of claim 1, wherein the determining a priority class in use of an unlicensed carrier comprises at least one of:

   determining the priority class in a predefined manner;
   determining the priority class through a negotiation between a base station and a UE;
   determining the priority class through reception of radio resource control (RRC) signaling;
   determining the priority class through physical layer specific downlink control information (DCI) signaling; and
   determining the priority class through physical layer common DCI signaling.

7. The method of claim 1, wherein the CCA parameter comprises at least one of:

   a listen-before-talk (LBT) mechanism, a CCA starting point, CCA duration, transmission duration, a number of LBT symbols, a transport block (TB) size, a number of times of retransmission of a hybrid automatic repeat request (HARQ), a maximum contention window, a minimum contention window, and an coefficient n, wherein a defer duration = a predetermined fixed duration + n * slot, and the slot refers to a length of a time slot.

8. The method of claim 7, wherein the LBT mechanism comprises: an LBT Cat2 and an LBT Cat4.

9. The method of claim 7, wherein the transmission duration comprises: separate uplink transmission duration, or remaining duration after transmission of downlink data in an occupation period.

10. The method of claim 7, wherein a position of the CCA starting point comprises at least one of: a starting point position of each of N equal-length sub-intervals of an interval in which the CCA detection is performed, and a starting point position randomly selected from a predetermined interval of the interval in which the CCA detection is performed, wherein N is a positive integer.

11. The method of claim 7, wherein the CCA duration comprises: idle CCA duration and sense CCA duration, wherein a time domain structure of the CCA duration comprises at least one of:

$$\text{CCA duration} = \text{idle CCA duration} + m * \text{sense CCA duration};$$

$$\text{CCA duration} = m * \text{sense CCA duration} + \text{idle CCA duration};$$

and

$$\text{CCA duration} = m1 * \text{sense CCA duration} + \text{idle CCA duration} + m2 * \text{sense CCA duration};$$

wherein m, m1, and m2 are preset parameters.

12. The method of claim 7, wherein
the CCA duration comprises at least one of: 16 $\mu$s, 25 $\mu$s, 34 $\mu$s and 43 $\mu$s; or
the transmission duration comprises at least one of: 0.5 ms, 1 ms, 1.5 ms, 2 ms, 3 ms, 4 ms, 5 ms, 8 ms and 10ms; or
the number of LBT symbols comprises at least one of: one symbol, two symbols, and remaining symbols at an end of a subframe after a downlink transmission; or
the TB size comprises one of: a first resource block, a second resource block, a third resource block and a fourth resource block; or
a range of the contention window comprises one of: {0,1}, {1,2}, {2,3}, {3,4,5,6,7}, {7,15}, {15,31,63}, {15,31,63,127,255,511,1023}; or
the number n comprises one of: 0, 1, 2, 3, 4, 5, 6 and 7.

13. The method of claim 1, wherein a relationship between the priority class and the CCA parameter comprises one of following relationships:

the lower the priority class, the later a CCA starting point;
the lower the priority class, the later the CCA starting point, and CCA duration is unchanged;
the lower the priority class, the later the CCA starting point, and the longer the CCA duration;
the lower the priority class, the CCA starting point is unchanged, and the longer the CCA duration;
the lower the priority class, the later the CCA starting point, the CCA duration is unchanged, and a value of transmission duration is unchanged;
the lower the priority class, the later the CCA starting point, the CCA duration is unchanged, and the larger the value of the transmission duration;
the lower the priority class, the later the CCA starting point, the longer the CCA duration, and the larger the value of the transmission duration;
the lower the priority class, the CCA starting point is unchanged, the CCA duration is unchanged, and the larger the value of the transmission duration;
the lower the priority class, the CCA starting point is unchanged, the longer the CCA duration, and the value of the transmission duration is unchanged;
the lower the priority class, the CCA starting point is unchanged, the longer the CCA duration, and the larger the value of the transmission duration;
the lower the priority class, the later the CCA starting point, the CCA duration is unchanged, the value of the transmission duration is unchanged, and a number of LBT symbols is unchanged;
the lower the priority class, the later the CCA starting point, the CCA duration is unchanged, the value of the transmission duration is unchanged, and the larger the number of the LBT symbols;
the lower the priority class, the later the CCA starting point, the CCA duration is unchanged, the value of the transmission duration is unchanged, and the smaller the number of the LBT symbo ls;

the lower the priority class, the later the CCA starting point, the CCA duration is unchanged, the larger the value of the transmission duration, and the number of the LBT symbols is unchanged;

the lower the priority class, the later the CCA starting point, the CCA duration is unchanged, the larger the value of the transmission duration, and the larger the number of the LBT symbols;

the lower the priority class, the later the CCA starting point, the CCA duration is unchanged, the larger the value of the transmission duration, and the smaller the number of the LBT symbols;

the lower the priority class, the later the CCA starting point, the longer the CCA duration, the larger the value of the transmission duration, and the number of the LBT symbols is unchanged;

the lower the priority class, the later the CCA starting point, the longer the CCA duration, the larger the value of the transmission duration, and the larger the number of the LBT symbols;

the lower the priority class, the later the CCA starting point, the longer the CCA duration, the larger the value of the transmission duration, and the smaller the number of the LBT symbols;

the lower the priority class, the CCA starting point is unchanged, the longer the CCA duration, the value of the transmission duration is unchanged, and the number of the LBT symbols is unchanged;

the lower the priority class, the CCA starting point is unchanged, the longer the CCA duration, the value of the transmission duration is unchanged, and the larger the number of the LBT symbols;

the lower the priority class, the CCA starting point is unchanged, the longer the CCA duration, the value of the transmission duration is unchanged, and the smaller the number of the LBT symbo ls;

the lower the priority class, the CCA starting point is unchanged, the longer the CCA duration, the larger the value of the transmission duration, and the number of the LBT symbols is unchanged;

the lower the priority class, the CCA starting point is unchanged, the longer the CCA duration, the larger the value of the transmission duration, and the larger the number of the LBT symbols;

the lower the priority class, the CCA starting point is unchanged, the longer the CCA duration, the larger the value of the transmission duration, and the smaller the number of the LBT symbols;

the lower the priority class, the CCA starting point is unchanged, the CCA duration is unchanged, the larger the value of the transmission duration, and the number of the LBT symbols is unchanged;

the lower the priority class, the CCA starting point is unchanged, the CCA duration is unchanged, the larger the value of the transmission duration, and the larger the number of the LBT symbols;

the lower the priority class, the CCA starting point is unchanged, the CCA duration is unchanged, the larger the value of the transmission duration, and the smaller the number of the LBT symbols;

the lower the priority class, the later the CCA starting point, the CCA duration is unchanged, the value of the transmission duration is unchanged, the number of the LBT symbols is unchanged, and a TB size is unchanged;

the lower the priority class, the later the CCA starting point, the CCA duration is unchanged, the value of the transmission duration is unchanged, the number of the LBT symbols is unchanged, and the larger the TB size;

the lower the priority class, the later the CCA starting point, the CCA duration is unchanged, the value of the transmission duration is unchanged, the number of the LBT symbols is unchanged, and the smaller the TB size;

the lower the priority class, the later the CCA starting point, the CCA duration is unchanged, the value of the transmission duration is unchanged, the larger the number of the LBT symbols, and the TB size is unchanged;

the lower the priority class, the later the CCA starting point, the CCA duration is unchanged, the value of the transmission duration is unchanged, the larger the number of the LBT symbols, and the larger the TB size;

the lower the priority class, the later the CCA starting point, the CCA duration is unchanged, the value of the transmission duration is unchanged, the larger the number of the LBT symbols, and the smaller the TB size;

the lower the priority class, the later the CCA starting point, the CCA duration is unchanged, the value of the transmission duration is unchanged, the smaller the number of the LBT symbols, and the TB size is unchanged;

the lower the priority class, the later the CCA starting point, the CCA duration is unchanged, the value of the transmission duration is unchanged, the smaller the number of the LBT symbols, and the larger the TB size;

the lower the priority class, the later the CCA starting point, the CCA duration is unchanged, the value of the transmission duration is unchanged, the smaller the number of the LBT symbols, and the smaller the TB size;

the lower the priority class, the later the CCA starting point, the CCA duration is unchanged, the larger the value of the transmission duration, the number of the LBT symbols is unchanged, and the TB size is unchanged;

the lower the priority class, the later the CCA starting point, the CCA duration is unchanged, the larger the value of the transmission duration, the number of the LBT symbols is unchanged, and the larger the TB size;

the lower the priority class, the later the CCA starting point, the CCA duration is unchanged, the larger the value of the transmission duration, the number of the LBT symbols is unchanged, and the smaller the TB size;

the lower the priority class, the later the CCA starting point, the CCA duration is unchanged, the larger the value of the transmission duration, the larger the number of the LBT symbols, and the TB size is unchanged;

the lower the priority class, the later the CCA starting point, the CCA duration is unchanged, the larger the value of the transmission duration, the larger the number of the LBT symbols, and the larger the TB size;

the lower the priority class, the later the CCA starting point, the CCA duration is unchanged, the larger the value of the transmission duration, the larger the number of the LBT symbols, and the smaller the TB size;

the lower the priority class, the later the CCA starting point, the CCA duration is unchanged, the larger the value of the transmission duration, the smaller the number of the LBT symbols, and the TB size is unchanged;

the lower the priority class, the later the CCA starting point, the CCA duration is unchanged, the larger the value of the transmission duration, the smaller the number of the LBT symbols, and the larger the TB size;

the lower the priority class, the later the CCA starting point, the CCA duration is unchanged, the larger the value of the transmission duration, the smaller the number of the LBT symbols, and the smaller the TB size;

the lower the priority class, the later the CCA starting point, the longer the CCA duration, the larger the value of the transmission duration, the number of the LBT symbols is unchanged, and the TB size is unchanged;

the lower the priority class, the later the CCA starting point, the longer the CCA duration, the larger the value of the transmission duration, the number of the LBT symbols is unchanged, and the larger the TB size;

the lower the priority class, the later the CCA starting point, the longer the CCA duration, the larger the value of the transmission duration, the number of the LBT symbols is unchanged, and the smaller the TB size;

the lower the priority class, the later the CCA starting point, the longer the CCA duration, the larger the value of the transmission duration, the larger the number of the LBT symbols, and the TB size is unchanged;

the lower the priority class, the later the CCA starting point, the longer the CCA duration, the larger the value of the transmission duration, the larger the number of the LBT symbols, and the larger the TB size;

the lower the priority class, the later the CCA starting point, the longer the CCA duration, the larger the value of the transmission duration, the larger the number of the LBT symbols, and the smaller the TB size;

the lower the priority class, the later the CCA starting point, the longer the CCA duration, the larger the value of the transmission duration, the smaller the number of the LBT symbols, and the TB size is unchanged;

the lower the priority class, the later the CCA starting point, the longer the CCA duration, the larger the value of the transmission duration, the smaller the number of the LBT symbols, and the larger the TB size;

the lower the priority class, the later the CCA starting point, the longer the CCA duration, the larger the value of the transmission duration, the smaller the number of the LBT symbols, and the smaller the TB size;

the lower the priority class, the CCA starting point is unchanged, the longer the CCA duration, the value of the transmission duration is unchanged, the number of the LBT symbols is unchanged, and the TB size is unchanged;

the lower the priority class, the CCA starting point is unchanged, the longer the CCA duration, the value of the transmission duration is unchanged, the number of the LBT symbols is unchanged, and the larger the TB size;

the lower the priority class, the CCA starting point is unchanged, the longer the CCA duration, the value of the transmission duration is unchanged, the number of the LBT symbols is unchanged, and the smaller the TB size;

the lower the priority class, the CCA starting point is unchanged, the longer the CCA duration, the value of the transmission duration is unchanged, the larger the number of the LBT symbols, and the TB size is unchanged;

the lower the priority class, the CCA starting point is unchanged, the longer the CCA duration, the value of the transmission duration is unchanged, the larger the number of the LBT symbols, and the larger the TB size;

the lower the priority class, the CCA starting point is unchanged, the longer the CCA duration, the value of the transmission duration is unchanged, the larger the number of the LBT symbols, and the smaller the TB size;

the lower the priority class, the CCA starting point is unchanged, the longer the CCA duration, the value of the transmission duration is unchanged, the smaller the number of the LBT symbols, and the TB size is unchanged;

the lower the priority class, the CCA starting point is unchanged, the longer the CCA duration, the value of the transmission duration is unchanged, the smaller the number of the LBT symbols, and the larger the TB size;

the lower the priority class, the CCA starting point is unchanged, the longer the CCA duration, the value of the transmission duration is unchanged, the smaller the number of the LBT symbols, and the smaller the TB size;

the lower the priority class, the CCA starting point is unchanged, the longer the CCA duration, the larger the value of the transmission duration, the number of the LBT symbols is unchanged, and the TB size is unchanged;

the lower the priority class, the CCA starting point is unchanged, the longer the CCA duration, the larger the value of the transmission duration, the number of the LBT symbols is unchanged, and the larger the TB size;

the lower the priority class, the CCA starting point is unchanged, the longer the CCA duration, the larger the value of the transmission duration, the number of the LBT symbols is unchanged, and the smaller the TB size;

the lower the priority class, the CCA starting point is unchanged, the longer the CCA duration, the larger the value of the transmission duration, the larger the number of the LBT symbols, and the TB size is unchanged;

the lower the priority class, the CCA starting point is unchanged, the longer the CCA duration, the larger the value of the transmission duration, the larger the number of the LBT symbols, and the larger the TB size;

the lower the priority class, the CCA starting point is unchanged, the longer the CCA duration, the larger the value of the transmission duration, the larger the number of the LBT symbols, and the smaller the TB size;

the lower the priority class, the CCA starting point is unchanged, the longer the CCA duration, the larger the value of the transmission duration, the smaller the number of the LBT symbols, and the TB size is unchanged;

the lower the priority class, the CCA starting point is unchanged, the longer the CCA duration, the larger the value of the transmission duration, the smaller the number of the LBT symbols, and the larger the TB size;

the lower the priority class, the CCA starting point is unchanged, the longer the CCA duration, the larger the value of the transmission duration, the smaller the number of the LBT symbols, and the smaller the TB size;

the lower the priority class, the CCA starting point is unchanged, the CCA duration is unchanged, the larger the value of the transmission duration, the number of the LBT symbols is unchanged, and the TB size is unchanged;

the lower the priority class, the CCA starting point is unchanged, the CCA duration is unchanged, the larger the value of the transmission duration, the number of the LBT symbols is unchanged, and the larger the TB size;

the lower the priority class, the CCA starting point is unchanged, the CCA duration is unchanged, the larger the value of the transmission duration, the number of the LBT symbols is unchanged, and the smaller the TB size;

the lower the priority class, the CCA starting point is unchanged, the CCA duration is unchanged, the larger the value of the transmission duration, the larger the number of the LBT symbols, and the TB size is unchanged;

the lower the priority class, the CCA starting point is unchanged, the CCA duration is unchanged, the larger the value of the transmission duration, the larger the number of the LBT symbols, and the larger the TB size;

the lower the priority class, the CCA starting point is unchanged, the CCA duration is unchanged, the larger the value of the transmission duration, the larger the number of the LBT symbols, and the smaller the TB size;

the lower the priority class, the CCA starting point is unchanged, the CCA duration is unchanged, the larger the value of the transmission duration, the smaller the number of the LBT symbols, and the TB size is unchanged;

the lower the priority class, the CCA starting point is unchanged, the CCA duration is unchanged, the larger the value of the transmission duration, the smaller the number of the LBT symbols, and the larger the TB size;

the lower the priority class, the CCA starting point is unchanged, the CCA duration is unchanged, the larger the value of the transmission duration, the smaller the number of the LBT symbols, and the smaller the TB size;

the lower the priority class, the larger a number of times of HARQ retransmission;

the lower the priority class, the smaller the number of times of HARQ retransmission;

the lower the priority class, the larger a maximum contention window;

the lower the priority class, the larger a minimum contention window; and

the lower the priority class, the larger the maximum contention window, and the larger the minimum contention window.

14. The method of claim 1, before the performing channel access of the unlicensed carrier, the method further comprises: obtaining at least one of a subframe position and a reserved symbol index for performing the CCA detection, wherein the obtaining at least one of a subframe position and a reserved symbol index for performing the CCA detection comprises at least one of:

   obtaining at least one of the subframe position and the reserved symbol index for performing the CCA detection in a predefined manner;
   obtaining at least one of the subframe position and the reserved symbol index for performing the CCA detection through an agreement in advance between a base station and a UE on the at least one of the subframe position and the reserved symbol index;
   obtaining at least one of the subframe position and the reserved symbol index for performing the CCA detection through configuration of a predetermined position in a transmission subframe with high-layer RRC signaling;
   obtaining at least one of the subframe position and the reserved symbol index for performing the CCA detection through configuration of an end position of downlink transmission with the high-layer RRC signaling;
   obtaining at least one of the subframe position and the reserved symbol index for performing the CCA detection through configuration of a CCA time domain pattern with the high-layer RRC signaling;
   obtaining at least one of the subframe position and the reserved symbol index detection through configuration with physical layer specific DCI signaling, common DCI signaling or newly designed DCI signaling; and
   obtaining at least one of the subframe position and the reserved symbol index through joint configuration with the high-layer RRC signaling and the physical layer specific DCI signaling or the common DCI signaling or the newly designed DCI signaling.

15. The method of claim 14, wherein at least one of the subframe position and the reserved symbol index is obtained through configuration with the common DCI signaling or the newly designed DCI signaling in the following manner:

   one or more bits of Y reserved bits in a licensed assisted access (LAA) subframe configuration branch in the common DCI signaling are used for indicating at least one of: a subframe position of a reserved symbol for performing the CCA detection, a CCA position, a CCA vacant symbol index, an interval of the CCA detection and the CCA starting point; or

one or more bits of all bits in the newly designed DCI signaling or a new branch in the common DCI signaling are used for indicating at least one of: the subframe position of the reserved symbol for performing the CCA detection, the CCA position, the CCA vacant symbol index, the interval of the CCA detection and the CCA starting point;

wherein, the Y is a preset number.

16. The method of claim 14, wherein bits of a field unused by the specific DCI signaling are reused for indicating at least one of: a subframe position of a reserved symbol for performing the CCA detection, the CCA position, a number of CCA vacant symbols, the interval of the CCA detection and the CCA starting point.

17. The method of claim 1, wherein the performing channel access of the unlicensed carrier according to a CCA parameter comprises:

receiving uplink grant information transmitted from a base station;
performing the CCA detection before a position determined according to a predetermined timing relationship; and
when the CCA detection succeeds, transmitting at least one of uplink data and a SRS to the base station.

18. The method of claim 17, after the receiving uplink grant information transmitted from a base station, further comprising at least one of:

transmitting a first indication information at a first predetermined position on a licensed carrier; and
transmitting the first indication information at a second predetermined position after succeeding in contention for a use right of the unlicensed carrier through the CCA detection;

wherein the first indication information is used for indicating that a UE has received the uplink grant information transmitted from the base station.

19. The method of claim 17 or 18, after the performing the CCA detection before a position determined according to a predetermined timing relationship, the method further comprises at least one of:

transmitting a second indication information at a third predetermined position on the licensed carrier; and
transmitting the second indication information at a fourth predetermined position after succeeding in contention for the use right of the unlicensed carrier through the CCA detection;

wherein the second indication information is used for indicating execution result information of the CCA detection performed by the UE, and the execution result information comprises: success or failure in the CCA detection.

20. The method of claim 18 or 19, wherein at least one of the first predetermined position, the second predetermined position, the third predetermined position and the fourth predetermined position is obtained using at least one of: an agreement in advance between the base station and the UE, configuration with base station specific DCI signaling, common DCI signaling or newly designed DCI signaling, high-layer RRC signaling, and CCA success position implicit indication.

21. The method of claim 18 or 19, wherein at least one of the first predetermined position, the second predetermined position, the third predetermined position and the fourth predetermined position comprises at least one of:

a predefined position;
a position determined according to a predetermined timing relationship n+k, wherein n is a subframe index of DCI, and k is an integer greater than or equal to 1 or an integer greater than or equal to 4;
a first uplink subframe;
a first uplink subframe in uplink burst transmission;
a subframe, on the licensed carrier, having a same position as a scheduling resource corresponding to the unlicensed carrier; and
a first subframe after the CCA detection succeeds.

22. The method of claim 18 or 19, wherein at least one of the first indication information and the second indication information is transmitted at at least one symbol position of a group consisting of:

a predetermined symbol, a first symbol, a last symbol, a third symbol in a first half slot, a fifth symbol in the first half slot, a third symbol in a second half slot, a fifth symbol in the second half slot, a fourth symbol in the first half slot, and a fourth symbol in the second half slot, wherein the first indication information and the second indication information are transmitted at different symbol positions.

23. The method of claim 7, wherein the CCA starting point comprises one of:

a subframe boundary of a PUSCH, a symbol boundary at which PUSCH transmission starts, or a time point which is a length of the CCA duration before a slot boundary at which the PUSCH transmission starts; or
a starting point of a region in which the CCA detection is performed, any time or a specific time point of the region in which the CCA is performed, a time point which is a length of Gap after the symbol boundary/slot boundary/subframe boundary, a time point which is the length of Gap after an ending point of downlink transmission, or the ending point of downlink transmission.

24. The method of claim 10 or 23, wherein the CCA starting point is determined in one manner of a group consisting of:

a base station notifies a UE of the CCA starting point through physical layer signaling;
the base station notifies the UE with the CCA starting position through high-layer signaling; and
the base station and the UE achieve an agreement on the CCA starting point in advance;

wherein the physical layer signaling comprises: UE-specific DCI or common DCI; or the high layer signaling is configured to the UE through RRC signaling.

25. The method of claim 1 or 7, wherein a CCA position and a number of symbols occupied by the CCA detection are determined in at least one manner of a group consisting of:

manner 1: the number of symbols and the CCA position specific for the CCA detection in each uplink subframe are set to vacant; and
manner 2: a base station indicates at least one of an uplink subframe, a corresponding vacant symbol in the subframe, and a number of vacant symbols.

26. The method of claim 25, wherein at least one of the number of symbols and the CCA position specific for the CCA detection in each uplink subframe is set to vacant in one manner of a group consisting of:

a first symbol of each uplink subframe is set to vacant;
a last symbol of each uplink subframe is set to vacant; and
a specific resource element (RE) on a corresponding symbol of the uplink subframe is set to vacant.

27. The method of claim 25, wherein the base station indicates at least one of the uplink subframe, the corresponding vacant symbol in the subframe, and the number of vacant symbols in at least one manner of a group consisting of:

indicating through high-layer signaling; and
indicating that a UE does not transmit a PUSCH at a corresponding symbol position in a scheduling subframe through physical layer specific DCI signaling, common DCI signaling or newly designed DCI signaling.

28. A channel access apparatus, comprising:

a determination module, which is configured to determine a priority class in use of an unlicensed carrier; and
a processing module, which is configured to perform channel access of the unlicensed carrier according to a clear channel assessment (CCA) parameter, wherein the CCA parameter matches the determined priority class and is used for performing a CCA detection before access to the unlicensed carrier.

29. The apparatus of claim 28, wherein the determination module comprises:

a first determination unit, which is configured to, when one priority class in use of the unlicensed carrier is provided, determine the one priority class as the priority class; or
a second determination unit, which is configured to, when at least two priority classes in use of the unlicensed carrier are provided, select, according to a predetermined principle, one priority class from the at least two priority classes as the priority class.

30. The apparatus of claim 28, wherein the determination module is further configured to determine the priority class in use of the unlicensed carrier through at least one manner of a group consisting of:

a predefined manner;
a negotiation between a base station and a UE;
reception of radio resource control (RRC) signaling;
physical layer specific downlink control information (DCI) signaling; and
physical layer common DCI signaling.

31. The apparatus of claim 28, further comprising:
an obtaining module, which is configured to, before the channel access of the unlicensed carrier according to the CCA parameter, obtain at least one of a subframe position and a reserved symbol index for performing the CCA detection through at least one manner of a group consisting of:

a predefined manner;
an agreement in advance between a base station and a UE on at least one of the subframe position and the reserved symbol index;
configuration of a predetermined position in a transmission subframe with high-layer RRC signaling;
configuration of an end position of downlink transmission with the high-layer RRC signaling;
configuration of a CCA time domain pattern with the high-layer RRC signaling;
joint configuration with physical layer specific DCI signaling, common DCI signaling or newly designed DCI signaling configuration; and
joint configuration with the high-layer RRC signaling and the physical layer specific DCI signaling or the common DCI signaling or the newly designed DCI signaling.

32. The apparatus of claim 31, wherein the obtaining module is further configured to obtain at least one of the sub frame position and the reserved symbol index through configuration with the common DCI signaling or the newly designed DCI signaling in the following manner:

one or more bits of Y reserved bits in a licensed assisted access (LAA) subframe configuration branch in the common DCI signaling are used for indicating at least one of: the subframe position of a reserved symbol used for performing the CCA detection, a CCA position, a CCA vacant symbol index, an interval of the CCA detection, a CCA starting point; or
one or more bits of all bits in the newly designed DCI signaling or a new branch in the common DCI signaling are used for indicating at least one of: the subframe position of the reserved symbol used for performing the CCA detection, the CCA position, the CCA vacant symbol index, the interval of the CCA detection and the CCA starting point;

wherein, the Y is a preset number.

33. The apparatus of claim 28, wherein the processing module comprises:

a receiving unit, which is configured to receive uplink grant information transmitted from a base station;
a detecting unit, which is configured to perform the CCA detection before a position determined according to a predetermined timing relationship; and
a first transmitting unit, which is configured to transmit uplink data or a SRS to the base station when the CCA detection succeeds.

34. The apparatus of claim 33, further comprising at least one of:

a second transmitting unit, which is configured to transmit a first indication information at a first predetermined position on a licensed carrier, wherein the first indication information is used for indicating that a UE has received the uplink grant information transmitted from the base station; and
a third transmitting unit, which is configured to transmit the first indication information at a second predetermined position after succeeding in contention for a use right of the unlicensed carrier through the CCA detection.

**35.** The apparatus of claim 33 or 34, wherein the processing module further comprises at least one of:

a fourth transmitting unit, which is configured to transmit a second indication information at a third predetermined position on the licensed carrier, wherein the second indication information is used for indicating execution result information of the CCA detection performed by the UE, and the execution result information comprises: success or failure in the CCA detection; and
a fifth transmitting unit, which is configured to transmit the second indication information at a fourth predetermined position after succeeding in contention for the use right of the unlicensed carrier through the CCA detection.

**36.** A user equipment (UE), comprising:

a memory, which is configured to store a plurality of executable instructions for channel access; and
a processor, which is configured to execute the executable instructions for channel access to: determine a priority class in use of an unlicensed carrier; and perform channel access of the unlicensed carrier according to a clear channel assessment (CCA) parameter, wherein the CCA parameter matches the determined priority class and is used for performing a CCA detection before access to the unlicensed carrier.

**37.** The UE of claim 36, wherein the processor is further configured to:

when one priority class in use of the unlicensed carrier is provided, determine the one priority class as the priority class; or
when at least two priority classes in use of the unlicensed carrier are provided, select, according to a predetermined principle, one priority class from the at least two priority classes as the priority class.

**38.** A base station, comprising:

a memory, which is configured to store a plurality of executable instructions for channel access; and
a processor, which is configured to execute the executable instructions for channel access to: determine a priority class in use of an unlicensed carrier; and perform channel access of the unlicensed carrier according to a clear channel assessment (CCA) parameter, wherein the CCA parameter matches the determined priority class and is used for performing a CCA detection before access to the unlicensed carrier.

**39.** The base station of claim 38, wherein the processor is further configured to:

when one priority class in use of the unlicensed carrier is provided, determine the one priority class as the priority class; or
when at least two priority classes in use of the unlicensed carrier are provided, select, according to a predetermined principle, one priority class from the at least two priority classes as the priority class.

**40.** A computer storage medium, which is configured to store a plurality of computer executable instructions for executing the channel access method of any one of claims 1 to 27.

Base station

**FIG. 1**

| Determine a priority class in use of an unlicensed carrier | S201 |

| Perform channel access of the unlicensed carrier according to a CCA parameter, where the CCA parameter matches the determined priority class and is used for performing a CCA detection before access to the unlicensed carrier | S202 |

**FIG. 2**

**FIG. 3**

| | | | | | | | | | |
|---|---|---|---|---|---|---|---|---|---|
| 1 | 2 | 3 | 4 | ----------- | 7 | 8 | 9 | 10 |

Interval for performing CCA

A1 starting point arbitrarily selected from the first small segment

A2 starting point arbitrarily selected from the fourth small segment

A3 starting point arbitrarily selected from the seventh and eighth small segments

A4 starting point arbitrarily selected from the tenth small segment

**FIG. 4**

| D | D | D | D | // | UE1 | UE1 | UE1 | // | UE1 UE2 | // | UE3 |
|---|---|---|---|---|---|---|---|---|---|---|---|

////// LBT

**FIG. 5**

Determination module — 61

Processing module — 62

**FIG. 6**

Determination module — 61

First determination unit — 71

Second determination unit — 72

Processing module — 62

**FIG. 7**

**FIG. 8**

**FIG. 9**

**FIG. 10**

Determination module — 61

Processing module — 62

91 — Receiving unit

92 — Detecting unit

Fourth transmitting unit — 101

Fifth transmitting unit — 102

93 — First transmitting unit

## FIG. 11

UE — 110

Memory — 1101

Processor — 1102

## FIG. 12

Base station — 120

Memory — 1201

Processor — 1202

## FIG. 13

# INTERNATIONAL SEARCH REPORT

| International application No. |
| --- |
| PCT/CN2017/079149 |

### A. CLASSIFICATION OF SUBJECT MATTER

H04W 74/08 (2009.01) i

According to International Patent Classification (IPC) or to both national classification and IPC

### B. FIELDS SEARCHED

Minimum documentation searched (classification system followed by classification symbols)

H04W; H04Q; H04L

Documentation searched other than minimum documentation to the extent that such documents are included in the fields searched

Electronic data base consulted during the international search (name of data base and, where practicable, search terms used)

CNTXT, CNABS, VEN, WOTXT, CNKI, BAIDU, PATENTICS: Clear Channel Assessment, CCA, LBT, listen before talk, unlicensed, unauthorized, access+, channel, switching, handover, handoff, priority, level, order, frequency, band?, carrier, frequency band, frequency spectrum, channel access

### C. DOCUMENTS CONSIDERED TO BE RELEVANT

| Category* | Citation of document, with indication, where appropriate, of the relevant passages | Relevant to claim No. |
| --- | --- | --- |
| PA | CN 105517181 A (ZTE CORPORATION) 20 April 2016 (20.04.2016) the whole document | 1-40 |
| PA | CN 106162898 A (ZTE CORPORATION) 23 November 2016 (23.11.2016) the whole document | 1-40 |
| PA | CN 106452701 A (ZTE CORPORATION) 22 February 2017 (22.02.2017) the whole document | 1-40 |
| A | CN 103188711 A (ZTE CORPORATION) 03 July 2013 (03.07.2013) the abstract, and claims 1-7 | 1-40 |
| A | CN 103517456 A (NETGEAR, INC.) 15 January 2014 (15.01.2014) the whole document | 1-40 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 14 June 2017 | 21 June 2017 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>WU, Xinghua<br><br>Telephone No. (86-10) 62089556 |

Form PCT/ISA /210 (second sheet) (July 2009)

## INTERNATIONAL SEARCH REPORT
Information on patent family members

| International application No. |
| --- |
| PCT/CN2017/079149 |

| Patent Documents referred in the Report | Publication Date | Patent Family | Publication Date |
| --- | --- | --- | --- |
| CN 105517181 A | 20 April 2016 | WO 2016045349 A1 | 31 March 2016 |
| CN 106162898 A | 23 November 2016 | WO 2016184331 A1 | 24 November 2016 |
| CN 106452701 A | 22 February 2017 | CN 106452708 A | 22 February 2017 |
| | | WO 2017024961 A1 | 16 February 2017 |
| CN 103188711 A | 03 July 2013 | WO 2013097398 A1 | 04 July 2013 |
| CN 103517456/ A | 15 January 2014 | US 8874124 B2 | 28 October 2014 |
| | | US 9591633 B2 | 07 March 2017 |
| | | US 2015009869 A1 | 08 January 2015 |
| | | EP 2675205 A2 | 18 December 2013 |
| | | EP 2675205 A3 | 27 May 2015 |
| | | US 2015009962 A1 | 08 January 2015 |
| | | US 2017094529 A1 | 30 March 2017 |
| | | US 2013337821 A1 | 19 December 2013 |

Form PCT/ISA /210 (patent family annex) (July 2009)

**REFERENCES CITED IN THE DESCRIPTION**

**Patent documents cited in the description**

- CN 201610203748